# EUROPÄISCHE PATENTSCHRIFT

(11) **EP 4 294 685 B1**
(45) Veröffentlichungstag und Bekanntmachung des Hinweises auf die Patenterteilung: **26.03.2025**
(21) Anmeldenummer: 21815897.0
(22) Anmeldetag: 01.11.2021
(51) Int. Cl.: B60T 8/88, B60T 17/22, B60W 40/12, B60W 50/04, G07C 5/08

(54) **FAHRZEUGZUSTANDSREGELUNGSSYSTEM, STRASSENFAHRZEUG UND VERFAHREN ZUR FAHRZEUGZUSTANDSREGELUNG ZUR EMISSIONSLIMITIERUNG**
VEHICLE STATE CONTROL SYSTEM, ROAD VEHICLE, AND METHOD FOR VEHICLE STATE CONTROL TO LIMIT EMISSIONS
SYSTÈME DE COMMANDE D'ÉTAT DE VÉHICULE, VÉHICULE ROUTIER ET PROCÉDÉ DE COMMANDE D'ÉTAT DE VÉHICULE POUR LIMITER LES ÉMISSIONS

(30) Priorität: 22.02.2021 DE 102021000919
(43) Veröffentlichungstag der Anmeldung: 27.12.2023
(73) Patentinhaber: Volkswagen Aktiengesellschaft, 38440 Wolfsburg (DE)
(72) Erfinder: AUGSBURG, Klaus, 99310 Arnstadt (DE); HESSE, David, 37318 Gerbershausen (DE); RICCIARDI, Vincenzo, 98693 Ilmenau (DE); HAMATSCHEK, Christopher, 99084 Erfurt (DE)
(86) Internationale Anmeldenummer: PCT/DE2021/000178
(87) Internationale Veröffentlichungsnummer: WO 2022/174849

(56) Entgegenhaltungen:
- DE-A1- 102015 113 587
- DE-A1- 102016 105 135
- DE-A1- 102016 215 900
- DE-A1- 102018 114 743

## Beschreibung

Die Erfindung betrifft ein emissionslimitierendes Fahrzeugzustandsregelungssystem und ein Verfahren zur Fahrzeugzustandsregelung zur Limitierung antriebsstrangferner Emissionen. Ferner betrifft die Erfindung ein in Bezug auf antriebsstrangferne Emissionen emissionslimitiertes Straßenfahrzeug.

Verkehrsbedingte Emissionen können als motorische Emissionen, insbesondere als Abgase von Verbrennungsmotoren und als außermotorische Emissionen vorliegen.

Beide Arten verkehrsbedingter Emissionen stehen in der öffentlichen Kritik, da diese zur Klimaveränderung beitragen und als gesundheitsgefährdend eingestuft werden. Seit über zwei Jahrzehnten arbeiten daher die Europäische Union und die Weltgesundheitsorganisation daran, die Partikelemissionen zu reduzieren, indem sie sowohl Richtlinien als auch Gesetze bereitstellen. Zur Reduktion motorischer Emissionen wurden in der Vergangenheit zunehmend effizientere Antriebssysteme entwickelt, wobei besonderer Wert auf innermotorische Maßnahmen bzw. Nachbehandlungssysteme gelegt wurde.

Für außermotorische Emissionen existiert derzeit kein gesetzlicher Grenzwert, was zu einem kontinuierlichen Anstieg dieses Anteils an den Gesamtemissionen führte. Daher wird geschätzt, dass heute motorische und außermotorische Emissionen zu vergleichbaren Anteilen zur Verschmutzung in städtischen Gebieten beitragen. Da ein Teil der Verschleißpartikel den Größenklassen des Feinstaubes (≤ 10 µm) zugeordnet werden kann, ist diese Feinstaubquelle für die menschliche Gesundheit von besonderer Relevanz.

Vor den genannten Hintergründen hat die UNECE das "particle measurement program" (PMP) gegründet, um ein standardisiertes Prüfverfahren zur Probenahme und Messung von Bremspartikeln zu entwickeln. Aus diesem Grund hat die Aufmerksamkeit für diese Emissionsquelle in der Vergangenheit zugenommen.

Aus dem Stand der Technik sind verschiedene Lösungsansätze zur Reduzierung antriebsstrangferner Emissionen, insbesondere von Reibbremsen, bekannt.

Zum einen beziehen sich die Lösungsvorschläge nach dem Stand der Technik darauf, den entstandenen Bremsstaub aufzufangen und so dessen Ausgabe in die Umwelt zu vermeiden oder zu reduzieren.

So wird beispielsweise in DE 10 2005 006 465 A1 eine Lösung beschrieben, wonach durch Anlegen eines elektrostatischen, magnetischen oder kombinierten Feldes die Bindung des emittierten Bremsstaubes an Komponenten des Bremssystems erfolgt. Die Reinigung der Komponenten erfolgt durch Abschalten des Feldes.

In JP 2008115957 A wird vorgeschlagen, ein elektrisches Potential zwischen Innen- und Außenseite der Felge anzulegen um so Bremsenpartikel an der Felgeninnenseite anzulagern.

DE 602 24 858 T2 beschreibt eine Bremsabrieb-Sammelvorrichtung, wobei während einer Bremsung ein elektrisches Feld zur Sammlung des Bremsstaubes an Sammlerplatten aufgebaut wird.

Weiterhin wird in DE 20 2005 006 844 U1 eine Vorrichtung zum Auffangen des Abriebs der Reibblöcke aus Bremsanlagen von Kraftfahrzeugen beschrieben, welche dadurch gekennzeichnet ist, dass über eine Strömungsführung der Bremsstaub zu einem Filtersystem transportiert und dort gefiltert wird.

Eine weitere Bremsstaubsammelvorrichtung wird in DE 10 2006 051 972 A1 beschrieben, wobei ein Gehäuse den Bereich des Bremssattelauslasses teilweise einschließt, wodurch der Bremsstaub durch eine Öffnung in das Gehäuse strömt und sich dort infolge eines vorteilhaften Designs des Gehäuses abscheidet.

Zudem wird in DE 10 2007 009 744 A1 eine Lösung zum Abtransport von Bremsstaub vorgeschlagen, nach der eine Absaugvorrichtung mit dem Abgassystem des Fahrzeuges verbunden ist und über den wirkenden Unterdruck der Bremsstaub an der Radbremse in Richtung des Abgassystems transportiert und innerhalb eines Partikelfilters abgeschieden wird.

Auch in DE 20 2005 017 472 U1 wird ein Konzept einer Bremsstaubabsorptionsanlage beschrieben welche dadurch gekennzeichnet ist, dass Bremsstaubpartikel durch eine Vorrichtung und unterstützt durch ein elektrostatisches Feld abgesaugt und in einem Filter abgeschieden werden.

In WO 2014/072234 A2 wird eine Absaugvorrichtung beschrieben, welche Bremsstaub durch im Bremsbelag integrierte Leitkanäle absaugt und einer Filteranlage zuführt.

Nachteilig bei diesen Lösungen nach dem Stand der Technik ist es, dass zum einen zusätzliche, aufwändige und störanfällige Zusatzeinrichtungen erforderlich sind und dass zum anderen das Problem verbleibt, die zurückgehaltenen Bremsstäube umweltverträglich zu entsorgen.

Darüber hinaus sind Lösungsansätze bekannt, die eine Stufe vorher ansetzen und darauf abzielen, die Entstehung des Bremsabriebs zu reduzieren.

In DE 10 2018 207 298 A1 ist eine Steuereinheit und Verfahren zur Reduzierung der emittierten Menge an Bremsstaub beschrieben, wobei das Verfahren das Ermitteln von Positionsdaten in Bezug auf eine Position des Kraftfahrzeuges und das Anpassen einer Bremskraftverteilung auf die unterschiedlichen am Kraftfahrzeug montierten Bremsvorrichtungen in Abhängigkeit der Positionsdaten beschreibt. Nachteilig ist hierbei, dass diese Lösung nicht der in der Praxis gegebenen Komplexität der Fahrsituation gerecht wird.

Ferner ist in DE 10 2009 001 332 A1 eine Lösung für eine umweltschonende Kurvenfahrt beschrieben. Hierbei wird ein Verfahren vorgeschlagen, bei dem der Kurvenverlauf einer zu durchfahrenden Kurve ermittelt wird, die Berechnung wenigstens eines Soll-Fahrparameters erfolgt, bei dem eine möglichst geringe Emission von Reifenabrieb, Bremsstaub und Kohlendioxid erfolgt und eine Angleichung eines tatsächlichen Fahrparameters an den berechneten Soll-Parameter erfolgt. Nachteilig ist hierbei insbesondere, dass lediglich für eine spezielle Fahrsituation eine Lösung aufgezeigt wird.

DE 10 2016 215 900 A1 betrifft ein Verfahren zur Ermittlung von Emissionen eines Fahrzeugs und ein System zur Durchführung des Verfahrens. Nach dieser Lösung ist vorgesehen, dass während des realen Fahrbetriebs in Abhängigkeit mindestens eines Fahrzeugparameters mittels einer Datenverarbeitungseinrichtung des Fahrzeugs Emissionen sensorgestützt oder modellbasiert ermittelt werden. Als Nachteil wird hierbei lediglich eine Lösung zur Ermittlung von Emissionen, nicht jedoch zu deren Reduzierung bereitgestellt.

Weiterhin offenbart WO 2020/031103 A1 ein Verfahren und eine Vorrichtung zur Erfassung und Bereitstellung von Daten zur Bewertung eines Bremsverhaltens, wobei die Partikelemission als Indikator dient. Diese Daten werden an einen Fahrer eines Fahrzeugs ausgegeben so dass dieser die Möglichkeit erhält, seinen Fahrstil in der Weise zu optimieren, dass weniger außermotorische Emissionen erzeugt werden. Nachteilig ist insoweit, dass ein emissionsreduzierendes Fahrverhalten lediglich angeregt wird und es weiterhin auf das tatsächlich praktizierte Fahrverhalten ankommt.

Eine weitere Lösung zur Reduzierung von Bremsstaubemissionen wird durch DE 10 2018 207 298 A1 beschrieben. Insbesondere wird vorgeschlagen, auf der Basis von Positionsdaten des Fahrzeugs die Bremskraft mit dem Ziel der Emissionsreduzierung auf unterschiedliche Bremsvorrichtungen gezielt zu verteilen. Nachteilig wird mit der Bremskraftverteilung lediglich ein besonderer technischer Aspekt aufgegriffen während andere Parameter unberücksichtigt bleiben.

Aufgabe der Erfindung ist es ein Fahrzeugzustandsregelungssystem anzugeben, das einen in Bezug auf antriebsstrangferne Emissionen emissionslimitierten Fahrbetrieb eines Straßenfahrzeugs bei gleichzeitiger Optimierung der Fahrdynamik ermöglicht und unabhängig von dem Antriebskonzept ist. Ferner ist es die Aufgabe, ein Straßenfahrzeug für einen solchen emissionslimitierten und zugleich fahrdynamikoptimierten Fahrbetrieb sowie ein Verfahren für eine solche emissionslimitierende und fahrdynamikoptimierende Fahrzeugzustandsregelung bereitzustellen.

Die Aufgabe wird in Bezug auf das Fahrzeugzustandsregelungssystem durch die im Patentanspruch 1 aufgeführten Merkmale gelöst. Ferner wird die Aufgabe in Bezug auf das Straßenfahrzeug durch die im Patentanspruch 8 aufgeführten Merkmale und in Bezug auf das Verfahren durch die im Patentanspruch 9 aufgeführten Merkmale gelöst. Bevorzugte Weiterbildungen ergeben sich aus den jeweiligen Unteransprüchen.

Dem erfindungsgemäßen Fahrzeugzustandsregelungssystem zur Limitierung antriebsstrangferner Emissionen liegen insbesondere nachfolgende Erwägungen zu Grunde.

Als antriebsstrangsferne Emissionen, nachfolgend teilweise auch als außermotorische Emissionen bezeichnet, werden im Sinne der vorliegenden Erfindung alle Partikelemissionen verstanden, die von einem Straßenfahrzeug ausgehen und nicht auf einen motorischen Verbrennungsprozess zurückführen. Antriebsstrangferne Emissionen liegen insbesondere als Emissionen einer Reibbremse und als Emissionen durch Fahrzeugreifen vor. Im weiteren Sinne sind davon auch Straßenabrieb sowie Resuspensionen infolge verkehrsbedingter Aufwirbelungen erfasst.

Die Verzögerung von Straßenfahrzeugen wird derzeit noch zu einem überwiegenden Anteil durch Reibungsbremsen umgesetzt, wobei eine Umwandlung von kinetischer in thermische Energie erfolgt. Der Entfall einer Reibungsbremse ist derzeit aufgrund der Verzögerungsanforderungen in Notbremssituationen, auch für den Fall batterieelektrischer Fahrzeuge mit hoher Rekuperationsleistung, nicht möglich. Als Standardfall für die Reibpartner, sind organische Bremsbeläge im Zusammenspiel mit Grauguss-Bremsscheiben anzusehen. Die maßgebliche Reibwirkung wird durch Kontaktbereiche übernommen, welche eine hohe Druck- und Scherfestigkeit aufweisen und in der Regel durch Faserenden oder einzelne, in der Belagmatrix vorhandene Metallspäne dargestellt werden. Die Partikel verlassen die Kontaktzone maßgeblich unter der Wirkung von Strömungs- und Trägheitskräften. Dies erfolgt teilweise tangential in Drehrichtung, teilweise werden sie in Umfangsrichtung an der Grenzfläche zur Bremsscheibe mitgenommen.

Als primäre Einflussgrößen auf den partikelförmigen Verschleiß an Reibungsbremsen ist neben der initialen Geschwindigkeit bzw. der Reibungsenergie auch die Flächenpressung und Reibzonentemperatur anzusehen. Der Partikelbildungsprozess und die dabei ablaufenden Zusammenhänge sind komplex und besonders von den Materialeigenschaften der in tribologischen Kontakt stehenden Reibpartner abhängig. Demnach ist zur Reduktion der durch die Kfz-Radbremse verursachten Emissionen neben materiellen und konstruktiven Ansätzen besondere Aufmerksamkeit auf die Fahrdynamik und die ablaufenden Betriebsbedingungen zu lenken.

Reifen- und Fahrbahnpartikel können auch als Verschleiß der in Verbindung stehenden Komponenten, nämlich der Reifenlauffläche und der Fahrbahnoberfläche, definiert werden. Als Verschleiß kann man einen sich weiterentwickelnden Materialabtrag aus der Oberseite eines festen Körpers, aufgrund von tribologischer Beanspruchung, also der Kontakt- und Relativbewegung eines entsprechenden Gegenkörpers, beschreiben.

Hauptursache für die Entstehung von Reifen- und Fahrbahnpartikel ist der Schlupf. Dieser entsteht, wenn die momentane Fahrzeuggeschwindigkeit größer oder kleiner als die Umfangsgeschwindigkeit des Reifens ist. Schlupf kann in einen Deformationsanteil des Reifenkörpers und einzelner Profilelemente, d.h. die elastische Verformung der Reifenseitenwand, und in einen Gleitanteil, also der partiellen Relativbewegung zwischen Reifen- und Fahrbahnoberfläche, unterteilt werden. Neben dem Abrieb der Reifenlauffläche und der Fahrbahnoberfläche aufgrund des Schlupfes, kann es auch zur Abgabe von Partikeln durch Verdampfung und Schmelzvorgänge der Reifenlaufläche bei erhöhten Temperaturen kommen. Letzteres kann im Falle von hoher Gleitgeschwindigkeit und geringer Kraftübertragung zwischen Rad und Fahrbahn auftreten. Darüber hinaus kann auch der Querschlupf, welcher für die Übertragung von Seitenkräften bei Kurvenfahrt verantwortlich ist als Ursache für die Entstehung von partikelförmigen Emissionen klassifiziert werden.

Der Erfindung liegt ferner die Überlegung zu Grunde, dass eine Reduktion antriebsstrangferner Emissionen erreicht werden kann, wenn eine Emissionsrelevanz von Fahrzeugzuständen, insbesondere von aktiven Regeleingriffen, situationsabhängig bewertbar gemacht und in eine Entscheidung für eine Regelung eines Fahrzeugzustands einbezogen wird.

Der Erfindung liegt darüber hinaus die Überlegung zu Grunde, dass bei der Bildung eines Emissionsbudget für eine Fahreinheit (also einer Gesamtstrecke, die eine Mehrzahl von emissionsrelevanten Fahrereignissen aufweist) eine Aufteilung des Emissionsbudget auf die einzelnen Emissionen der Fahrereignisse unter Berücksichtigung der Auswirkungen auf die Fahrdynamik der jeweiligen Fahrereignisse es ermöglicht, insgesamt bei gleicher Gesamtemission eine bessere Fahrdynamik zu erzielen, als wenn lediglich eine Bewertung der Emissionsrelevanz einzelnen Fahrereignisse jeweils für sich erfolgt.

Insgesamt können je nach betrachtetem System differenzierte Einflussgrößen zur Entstehung eines partikelförmigen Abriebs definiert werden, wobei die Intensität und Wechselwirkungen mit anderen Einflussgrößen anhand von mathematischen Modellen oder unter Anwendung von Algorithmen des maschinellen Lernens abgebildet oder beschrieben werden können. Die Beschreibung stellt die Basis für eine emissions-, verschleiß- und fahrdynamikoptimale Aktion bezüglich Beschleunigungs- und/oder Verzögerungs- und/oder Querdynamikregelung dar.

Hierzu weist das Fahrzeugzustandsregelungssystem als Grundkomponenten eine Zustandserfassungseinheit, eine Datenbasiseinheit und eine Steuerungs- und Auswertungseinheit auf.

Die Zustandserfassungeinheit ist erfindungsgemäß ausgebildet, Zustandsdaten zu erfassen. Bei den Zustandsdaten handelt es sich um Verkehrszustandsdaten, Fahrzeugzustandsdaten oder Fahrzeugsubsystemdaten.

Die Zustanderfassungseinheit weist mehrere Erfassungseinheiten auf, wobei es sich dabei um die Verkehrssituationserfassungseinheit, die Fahrzeugzustandserfassungeinheit und die Fahrzeugsubsystemerfassungseinheit handelt.

Die Verkehrssituationserfassungseinheit ist ausgebildet, die Verkehrszustandsdaten zu erfassen und übertragbar bereitzustellen. Bei der Verkehrssituationserfassungeinheit kann es sich insbesondere um Sensoren oder Systeme zur Erfassung des Verhaltens anderer Verkehrsteilnehmer wie Geschwindigkeiten anderer Fahrzeuge, der Verhaltensanforderung von verkehrsregelnden Einrichtungen wie Ampeln oder der räumlichen Zusammenhänge des Verkehrsraums wie Fahrbahnbreite, Entfernung zu einer Kreuzung und ähnlichem handeln. Ferner kann es sich um fernübertragene Daten beispielsweise in Form Navigationsdaten, Wetterdaten oder beispielsweise Staumeldungen handeln. Mit der Verkehrssituationserfassungseinheit werden somit Externalitäten zu dem Fahrzeug erfasst.

Die Fahrzeugzustandserfassungseinheit ist ausgebildet, die Fahrzeugzustandsdaten zu erfassen und übertragbar bereitzustellen. Die Fahrzeugzustandsdaten sind insbesondere Daten zur Fahrdynamik des Fahrzeugs wie beispielsweise Geschwindigkeit, Beschleunigung in Fahrtrichtung oder Querbeschleunigung. Hierzu weist die Fahrzeugzustandserfassungseinheit ebenfalls geeignete Sensoren auf.

Letztlich weist die Zustandserfassungseinheit zudem eine Fahrzeugsubsystemerfassungseinheit auf die ausgebildet ist, die Fahrzeugsubsystemdaten zu erfassen und übertragbar bereitzustellen. Bei einem solchen Fahrzeugsubsystem kann es sich insbesondere um eine Reibbremse oder auch um einen Fahrzeugreifen handeln. Der Zustand eines solchen Fahrzeugsubsystems wird durch mindestens eine physikalische Größe, vorzugsweise jedoch durch mehrere physikalische Größen abgebildet. Bei einer solchen physikalischen Größe kann es sich beispielsweise um die Temperatur einer Bremsscheibe oder die Temperatur einer Reifenoberfläche handeln.

Die Datenbasiseinheit weist ein statisches Datenbasismodul, ein dynamisches Datenbasismodul und ein Datenmanagementmodul auf. Ferner ist die Datenbasiseinheit mit der Zustandserfassungseinheit datenverbunden und kann von dieser Zustandsdaten erhalten.

Das statische Datenbasismodul weist statische Daten zu Ursache-Wirkungsbeziehungen zu antriebsstrangfernen Emissionen auf. Hierbei kann es sich beispielsweise um hinterlegte Kennlinien oder Kennfelder handeln. So können beispielsweise die Zusammenhänge zwischen Fahrgeschwindigkeit, Temperatur und Partikelemission einer Reibbremse als Kennlinie oder Kennfeld hinterlegt sein. Die so hinterlegten Daten beruhen auf experimentellen Versuchsreihen oder auf Felddaten und gewähren so ein hohes Maß an Zuverlässigkeit. Diese Ursache-Wirkungsbeziehungen gelten allgemein und können daher als eine statische Datenbasis dienen.

Das erfindungsgemäße Fahrzeugzustandsregelungssystem ist insbesondere durch das dynamische Datenbasismodul und dessen Zusammenwirken mit den weiteren Komponenten gekennzeichnet. Das dynamische Datenbasismodul weist veränderliche Daten zu antriebsstrangfernen Emissionen auf. Als veränderliche Daten zu antriebsstrangfernen Emissionen gelten alle Daten, die nicht als statische Datenbasis eine allgemeine Geltung aufweisen und für die antriebstrangfernen Emissionen situationsbezogen relevant sein können. Solchen veränderliche Daten können beispielsweise als dynamisch wirkende Einflussgrößen oder auch als Daten zu einer Zustandshistorie vorliegen.

Bei einer dynamisch wirkenden Einflussgröße kann beispielsweise eine Korrosionsschutzbeschichtung einer neu eingebauten Bremsschreibe vorliegen, diese verändert die Bremswirkung und das Emissionsverhalten und unterliegt zugleich einem zunehmenden Abtrag infolge einer Bremsbetätigung.

Bei Daten zur Zustandshistorie kann es sich beispielsweise um Klimadaten handeln. Liegt beispielsweise über einen längeren Zeitraum eine hohe Luftfeuchtigkeit vor, kann von einem Korrosionsansatz auf der Oberfläche der Bremsscheibe ausgegangen werden, der sowohl die Bremswirkung als auch zugleich das Emissionsverhalten verändert. Zudem wird der Korrosionsansatz zunehmend durch eine Bremsbetätigung abgetragen.

Bei den veränderlichen Daten des dynamischen Datenmoduls handelt es sich somit um Daten, die einerseits das Emissionsverhalten relevant beeinflussen aber andererseits stets lediglich situationsbezogene Gültigkeit aufweisen.

Ein weiteres Element der Datenbasiseinheit ist das Datenmanagementmodul.

Dieses ist ausgebildet, die veränderlichen Daten in das dynamische Datenbasismodul einzuschreiben oder zu löschen. Auf diese Weise wird durch das Datenmanagementmodul bewirkt, dass in dem dynamischen Datenbasismodul aktuelle situationsrelevante Daten zur Verfügung stehen.

Das Datenmanagementmodul ist zudem ausgebildet, sowohl die statischen Daten aus dem statischen Datenbasismodul als auch die veränderlichen Daten aus dem dynamischen Datenbasismodul abzurufen und für die Steuerungs- und Auswertungseinheit als Datenbasisdaten übertragbar bereitzustellen. Die statischen Daten und die dynamischen Daten werden somit zusammengefasst auch als die Datenbasisdaten bezeichnet.

Das Datenmanagementmodul bewirkt erfindungsgemäß, dass der Steuerungs- und Auswertungseinheit neben den Zustandsdaten auch Datenbasisdaten zur Verfügung stehen sowie insbesondere dass die Datenbasisdaten neben den statischen Daten stets auch die für die jeweilige Situation relevanten veränderlichen Daten umfassen.

Die Steuerungs- und Auswertungseinheit ist erfindungsgemäß sowohl mit der Zustandserfassungseinheit als auch mit der Datenbasiseinheit datenverbunden. Sie ist zudem ausgebildet, von der Zustandserfassungseinheit die Zustandsdaten und von der Datenbasiseinheit die Datenbasisdaten zu erhalten und zu verarbeiten. Die Zustandsdaten und die Datenbasisdaten werden zusammengefasst auch als die Eingangsdaten bezeichnet.

Die Steuerungs- und Auswertungseinheit stellt im Ergebnis der Verarbeitung der Eingangsdaten alternative vorläufige Stellbefehle bereit, wobei den alternativen vorläufigen Stellbefehlen prädiktive Emissionskennwerte zugeordnet sind. Die pädiktiven Emissionskennwerte drücken aus, welche voraussichtlichen antriebsstrangfernen Emissionen bei der Ausführung des betreffenden Stellbefehls verursacht werden. Für die Berechnung der prädiktiven Emissionskennwerte sind dabei insbesondere die Ursache-Wirkungsbeziehungen relevant, wie sie in dem statischen Datenmodul als statische Daten abgelegt sind. Hierbei kann es sich beispielsweise um den Zusammenhang zwischen der Temperatur der Bremsscheibe und der Partikelemission durch den Bremsabrieb handeln. In die Berechnung der prädiktiven Emissionskennwerte gehen ferner Zustandsdaten wie die Geschwindigkeit oder veränderliche Daten wie die Gesamtbetriebsstunden einer Reibbremse ein. Als alternative vorläufige Stellbefehle wird verstanden, dass in der Regel mehrere unterschiedliche denkbare Stellbefehle für denselben Zustand berechnet werden und so parallel für eine nachfolgende Bewertung zur Verfügung stehen.

Die Steuerungs- und Auswertungseinheit weist zudem ein Kalkulationsmodul auf. Das Kalkulationsmodul ist ausgebildet, aus den Zustandsdaten und aus den Datenbasisdaten ein Emissionsbudget für eine Fahreinheit zu errechnen.

Als Fahreinheit wird hierbei die Zusammenfassung einer Mehrzahl von einzelnen Fahrereignissen verstanden die durchgeführt werden, um mit einem Fahrzeug eine bestimmte Wegstrecke von einem Ausgangspunkt zu einem Zielpunkt zurückzulegen. Als Fahrereignis wird ein Fahrabschnitt der Fahreinheit verstanden, der durch einen oder mehrere Regeleingriffe von einem vorhergehenden Fahrabschnitt abgegrenzt ist. Das Fahrereignis wird teilweise auch als Fahrevent oder Fahrsektion bezeichnet.

Ein Emissionsbudget kann insbesondere auf einer Vorgabe beruhen, welche Emission pro Fahrstrecke als zulässig angesehen wird. Diese Vorgabe kann beispielsweise durch einen Fahrzeughersteller als ein Qualitätsmerkmal des Fahrzeugs vorgegeben und in der Datenbasiseinheit hinterlegt sein. Es ist ferner denkbar, dass insoweit auch gesetzliche Vorgaben bestehen werden, die dann in der Datenbasiseinheit hinterlegt sind und bei eventuellen Änderungen der gesetzlichen Vorgaben durch Veränderung der Datenbasisdaten auch anpassbar sind.

Anhand der Zustanddaten und der Datenbasisdaten kann beispielsweise nach Eingabe des Ausgangspunktes und des Zielpunktes einer durchzuführenden Fahrt mittels eines Routenplaners die Wegstrecke ermittelt werden, so dass die Länge der Fahrstrecke bekannt ist. Auf Grundlage der Fahrstrecke kann so das Emissionsbudget errechnet werden. Das Emissionsbudget ist die Summe der Emissionen, die bei der Durchführung der Fahrt auf dieser Fahrstrecke insgesamt von dem Fahrzeug abgegeben werden dürfen.

Ferner ist das Kalkulationsmodul ausgebildet, mittels des errechneten Emissionsbudgets Soll-Emissionskennwerte für die vorläufigen alternativen Stellbefehle zu ermitteln. Dem liegt zu Grunde, dass zu der ermittelten Wegstrecke aus den Zustandsdaten und Datenbasisdaten auch Geodaten der Wegstrecke wie beispielsweise Kurvenradien, Gefälle, Daten zum Straßenbelag und Ähnliches, sowie Daten zu Geschwindigkeitsregelungen, Ampelanlagen, möglicherweise Staus und Ähnliches bekannt sind.

Damit können die alternativen vorläufigen Stellbefehle für die einzelnen Fahrereignisse mit den ihnen jeweils zugeordneten prädiktiven Emissionskennwerte ermittelt werden. Die Soll-Emissionkennwerte bezeichnen die Emissionskennwerte, die für ein bestimmtes Fahrereignis zur Verfügung stehen so dass deren Gesamtheit das Emissionsbudget nicht übersteigt.

Auf dieser Grundlage können nun die Stellbefehle aus den alternativen vorläufigen Stellbefehlen ausgewählt werden, deren zugeordnete prädiktive Emissionskennwerte den Soll-Emissionskennwerten entsprechen. Somit wird es erreicht, dass die Summe der prädiktiven Emissionskennwerte der ausgewählten Stellbefehle das Emissionsbudget nicht überschreiten.

Damit wird es vorteilhaft zugleich ermöglicht, das Emissionsbudget so auf die prädiktiven Emissionskennwerte der Stellbefehle aufzuteilen, dass eine möglichst hohe Fahrdynamik erreicht wird.

Die erfindungsgemäße Steuerungs- und Auswertungseinheit weist hierfür ein Bewertungsmodul auf das ausgebildet ist, mittels eines Vergleichs der prädiktiven Emissionskennwerte mit den Soll-Emissionskennwerten aus den alternativen vorläufigen Stellbefehlen einen finalen Stellbefehl auszuwählen.

Dem Bewertungsmodul liegt zu Grunde, dass unterschiedliche Ziele der Fahrzeugzustandsregelung, nachfolgend als Regelungsziele bezeichnet, in einem Zielkonflikt stehen können. Solche Regelungsziele können insbesondere eine möglichst geringe Fahrzeit, ein möglichst geringer Energieträgerverbrauch oder eine möglichst geringe Emission aus antriebsstrangfernen Quellen sein. So wird beispielsweise ein hoher Zielerreichungsgrad in Bezug auf das Regelungsziel einer geringen Fahrzeit - nachfolgend auch als hohe Fahrdynamik bezeichnet - mit einem geringen Zielerreichungsgrad in Bezug auf das Regelungsziel einer geringen Emission einhergehen. Eine Auswahlentscheidung zwischen verschiedenen möglichen Stellbefehlen wird in der Regel einen Kompromiss der Zielerreichungsgrade der verschiedenen Regelungsziele bewirken. Mit dem Bewertungsmodul wird eine Gewichtung der Regelungsziele vorgenommen. Auf der Basis der Gewichtung kann somit durch das Bewertungsmodul errechnet werden, welcher der alternativen vorläufigen Stellbefehle für die gewichteten Regelungsziele insgesamt die höchste Optimierung bewirkt. Je nach Gewichtung wird die insgesamt höchste Optimierung bei unterschiedlichen Zielerreichungsgraden der verschiedenen Regelungsziele erreicht, so dass bei unterschiedlicher Gewichtung in der Regel ein anderer alternativer vorläufiger Stellbefehl zur Auswahl kommt. Besonders bevorzugt ist die Gewichtung durch den Anwender einstellbar, so dass beispielsweise ein besonders emissionsarmer Fahrzeugbetrieb gewählt werden kann, wobei dann eine etwas längere Fahrzeit in Kauf genommen wird. Der je nach Gewichtung ausgewählte Stellbefehl wird als finaler Stellbefehl bezeichnet.

Das Bewertungsmodul ist dabei so ausgebildet, dass es die Zielerreichung der Fahrdynamik bei einer unterschiedlichen Abweichung der prädiktiven Emissionskennwerte zu den Soll-Emissionskennwerten ermittelt, wobei in der Summe die prädiktiven Emissionskennwerte das Emissionsbudget nicht überschreiten. Es handelt sich stets lediglich um eine unterschiedliche Aufteilung des Emissionsbudget. Zugleich wird so eine unterschiedliche Fahrdynamik bei den einzelnen Fahrereignissen erreicht, die als fahrereignisbezogene Fahrdynamikeinzelresultate summiert in eine Gesamtbewertung gebracht werden. Die Auswahl der finalen Stellbefehle erfolgt dann so, dass in der Summe die Fahrdynamikeinzelresultate ein optimiertes Fahrdynamikgesamtresultat ergibt. Dies bedeutet dass das Emissionsbudget so aufgeteilt wird, dass zum einen die Emissionen bei den Fahrereignissen höher sein dürfen, in denen durch Emissionserhöhung der relativ höchste Fahrdynamikgewinn erzielt wird und zum anderen dafür zur Kompensation bei den Fahrereignissen niedriger sein müssen, bei denen die Emissionsreduzierung den relativ geringsten Fahrdynamikverlust bewirkt.

Nach erfolgter Auswahl durch das Bewertungsmodul ist die Steuerungs- und Auswertungseinheit ausgebildet, den finalen Stellbefehl an eine Aktoreinheit auszugeben, wobei mittels der Aktoreinheit ein Fahrzeugzustand beeinflussbar ist.

Der finale Stellbefehl wird erfindungsgemäß an eine Aktoreinheit ausgegeben. Als Stellbefehl ist daher jede Ausgabe zu verstehen, mit der ein bestimmter Zustand einer nachfolgenden technischen Einheit bewirkt wird. Es kann sich insbesondere um einen direkten Schaltbefehl, aber auch lediglich um einen Datenausgang handeln. Als ein Stellbefehl im Sinne der vorliegenden Erfindung wird auch ein Nichtbefehl verstanden, also die Festlegung nicht aktiv in den Fahrzeugzustand einzugreifen sondern beispielsweise das Fahrzeug ohne Beschleunigung oder Verzögerung rollen zu lassen.

Als Aktor im Sinne der vorliegenden Erfindung ist jede technische Einheit zu verstehen, deren Zustand durch einen eingehenden Stellbefehl geändert wird. Zunächst sind als Aktor im Sinne der vorliegenden Erfindung alle unmittelbar auf eine physikalische Größe wirkenden Einheiten zu verstehen. Als Aktor wird beispielsweise eine direkte Betätigung einer Reibbremse, die Betätigung einer Wirbelstrombremse oder eine Regelung einer elektrischen Antriebsmaschine sowohl im Antriebsmodus als auch im Generatorbetrieb verstanden. So kann beispielsweise eine Fahrzeugverzögerung durch eine Einstellung des aufgenommenen Drehmoments im Generatorbetrieb oder auch - alternativ oder kummulativ - durch eine Betätigung einer Reibungsbremse bewirkt werden. Ferner wird als Aktor im Sinne der vorliegenden Erfindung auch jede andere technische Einrichtung wie beispielsweise ein Fahrzeugsubsystem oder eine weitere Steuerungs- und Auswertungseinheit verstanden, deren Betriebszustand durch den Stellbefehl beeinflusst wird und die dadurch mittelbar den Fahrzeugzustand beeinflusst.

Dabei ist eine Interaktion mit unterschiedlichen Fahrzeugsystemen, wie beispielsweise dem Antriebsstrang, denkbar, um eine fahrsituationsoptimale Regelung zu gewährleisten. Im Beispiel eines elektrischen Antriebskonzeptes wird die kinetische Energie des in Bewegung befindlichen Fahrzeuges in elektrische Energie umgewandelt, welche wiederum zwischengespeichert werden kann. Das erforderliche Verzögerungsmoment kann vollständig durch die elektrische Antriebsmaschine im Generatorbetrieb oder auch durch Kopplung mittels mechanischer Reibungsbremse bereitgestellt werden, wobei daraus der Vorteil einer reduzierten Anzahl an Applikationen der Reibungsbremse, einer Reduktion von Bremsdruck, Reibleistung und Reibzonentemperatur sowie damit gekoppeltem Feinstaubausstoß resultiert.

Ein wesentlicher Vorteil der erfindungsgemäßen Lösung besteht darin, dass bereits durch eine intelligente Fahrdynamikregelung und ohne physische Zusatzmittel eine antriebsstrangferne Emissionsreduzierung mittels Limitierung ermöglicht wird.

Insbesondere ermöglicht es die erfindungsgemäße Lösung vorteilhaft, Ursache-Wirkungsbeziehungen, welche Fahrsituationsklassen übergeordnet sind, zur Reduktion des Bremsen- und/oder Reifen- und/oder Fahrbahnabriebs zu berücksichtigen.

So kann es vorteilhaft durch die erfindungsgemäße Lösung beispielsweise ermöglicht werden, dass nicht eine dem Verkehrsfluss optimale und/oder dem Passagier zumutbare Fahrzeugbeschleunigung von einem Datenverarbeitungs- und Entscheidungselement ausgegeben wird, sondern eine Beschleunigung, bei der unter Bezug zur Fahrsituation, wie beispielsweise ein aus der Fahrbahnbeschaffenheit resultierender Reibwert auf niedrigem Niveau, eine Minimierung des Antriebschlupfes auftritt, so dass der Reifenabrieb signifikant reduziert wird.

Durch die erfindungsgemäße Einbeziehung von Fahrzeugsubsystemen, wie der oben beschriebenen Nutzung der elektrischen Antriebsmaschine im Generatorbetrieb wird vorteilhaft ein ganzheitliches Regelkonzept zur Reduktion antriebsstrangferner Emissionen bereitgestellt.

Die Erfindung zielt insbesondere auf die zukünftig zunehmenden Anteile des teilautonomen und autonomen Fahrens ab, wobei situationsabhängige Fahrentscheidungen hochdynamisch, jedoch unter Minimierung von Feinstaubemissionen umgesetzt werden.

Es wird ein Zustand des Fahrzeuges und der Umwelt des Fahrzeuges mittels geeigneter Sensorik, Kamera, Kraftfahrzeug-Kraftfahrzeug-Kommunikation oder Kraftfahrzeug-zu-Infrastruktur-Kommunikation oder sonstiger Zustandserfassungen in Echtzeit erfasst und ausgewertet. Zur vollautomatischen Führung werden dabei Berechnungsstrukturen bereitgestellt, die anhand von Eingangsdaten entsprechend angepasste Ausgangsdaten berechnen.

Unter Einbeziehung von Ursache-Wirkungsbeziehungen zwischen dem momentanen, wie auch erwarteten Betriebszustand des betrachteten Fahrzeugsubsystems, wie der Reibungsbremse, mit der Bildung partikelförmiger Emissionen infolge von Bremsen-, Reifen- oder Straßenabrieb wird die Aktion der Beschleunigung und/oder Verzögerung und/oder Querführung (Lenken) des Fahrzeuges bewertet und ein Regeleingriff und/oder Rückgabe eines digitalen Wertes umgesetzt. Für den Fall eines autonomen oder teilautonomen Führens des Fahrzeuges erfolgt zudem in Echtzeit die Erfassung und/oder Bereitstellung von Daten über Verkehrssituation, Fahrzustand, Fahrzeugsubsystemdaten sowie Ursache-Wirkungsbeziehungen zur Bestimmung einer verschleiß- und fahrdynamikoptimalen Aktion.

Die durch die Steuerungs- und Auswertungseinheit als ein Datenverarbeitungs- und Entscheidungselement berechnete emissions-, verschleiß- und fahrdynamikoptimale Aktion in Abhängigkeit von Verkehrssituation, Fahrzustand und Fahrzeugsubsystemdaten sowie Ursache-Wirkungsbeziehungen, welche den weiteren Fahrzeugzustand des betrachteten Fahrzeuges beeinflusst, kann als Regeleingriff oder in Form einer Rückgabe eines digitalen Wertes zur Ansteuerung von Fahrzeugsystemen, beispielsweise zur Verzögerungsregelung mittels Elektromotor im Generatorbetrieb, hinsichtlich Beschleunigung, Verzögerung und Querdynamik definiert sein, wobei neben Daten der Umwelt auch Daten über das betrachtete Fahrzeugsubsystem bei der Bestimmung der verschleiß- und fahrdynamikoptimalen Aktion berücksichtigt werden.

Dabei beschränkt sich die erfindungsgemäße Lösung nicht auf das Ziel, emittierten Feinstaub vollständig zu unterbinden, sondern auch wirkoptimale Betriebsbedingungen, wie beispielsweise der Reibungsbremse durch temporäre Betätigung zur Aufrechterhaltung eines wirkoptimalen Betriebsbereiches für den Fall von Notbremssituationen, sicherzustellen, weshalb die Fahrentscheidung gleichzeitig als emissions-, verschleiß- und fahrdynamikoptimale Aktion zu bezeichnen ist.

Insbesondere ist es vorteilhaft, dass durch die Bildung eines Emissionsbudgets und dessen optimierte Aufteilung auf einzelne Fahrereignisse unter Berücksichtigung der Auswirkungen auf die Fahrdynamik eine höhere Fahrdynamik bereitgestellt werden kann, ohne dass eine Erhöhung der Emission eintritt.

Ferner ist es ein Vorteil des erfindungsgemäßen Fahrzeugzustandsregelungssystem, es nicht nur ermöglicht, die Menge an emittiertem Feinstaub einer Reibungsbremse zu reduzieren, sondern auch wirkoptimale Betriebsbedingungen, wie beispielsweise der Reibungsbremse durch temporäre Betätigung zur Aufrechterhaltung eines wirkoptimalen Betriebsbereiches für den Fall von Notbremssituationen, sicherzustellen.

Vorteilhaft kann das erfindungsgemäße Fahrzeugzustandsregelungssystem sowohl bei einem teilautonomen als auch autonomen Fahren eine Emissionsreduzierung bereitstellen.

Teilautonomes und autonomes Fahren eines Fahrzeuges werden durch die Funktionen des Fahrzeuges und die Aufgaben des Fahrers beziehungsweise Passagiers unterschieden.

Bereits im assistierten Fahren kann durch einzelne Assistenzsysteme beispielsweise eine Regelung von Geschwindigkeit, Beschleunigung und Verzögerung in Abhängigkeit des vorausfahrenden Fahrzeuges erfolgen.

Im Falle des autonomen Fahrens erfolgt die Steuerung der Fahrdynamik autonom.

Das Fahrzeugzustandsregelungssystem kann einen emissionsoptimierten Betrieb für ein Fahrzeug jedweder Bauart oder jedweden Antriebskonzepts bereitstellen, wobei vorteilhafterweise ein Elektromotor zur Gewährleistung des regenerativen Bremsens integrativer Bestandteil ist. Dieses Fahrzeug kann mit unterschiedlicher Sensorik zur Fahrsituationserfassung, wie mindestens einem Ultraschallsensor, einem Radar, einer Kamera oder Sensorik sonstiger physikalischer Messprinzipe zur Erfassung des Zustandes der Umwelt ausgestattet sein.

Zur Reduktion von partikelförmigem Abrieb an Fahrzeugreifen oder Reibungsbremse durch Änderung der Fahrdynamik in Form von Beschleunigung oder Verzögerung ist insbesondere die Intensität von Beschleunigungs- und Bremsmoment, auch unter Nutzung von Systemen des Fahrzeuges, wie z.B. dem Antriebsstrang zur Umsetzung einer Verzögerung im Generatorbetrieb ohne die Aktuierung der Reibungsbremse, in Abhängigkeit einer situationsabhängigen Regelung unter Einbeziehung von Ursache-Wirkungsbeziehungen begrenzbar.

Im Besonderen zielt die erfindungsgemäße Lösung auf einen Kompromiss zwischen Fahrdynamik/Fahrkomfort und den zur Umsetzung der Fahraufgabe erforderlichen Beschleunigungs-, Verzögerungs- oder Querbeschleunigungsleistung ab, wobei letztere direkt mit dem Partikelbildungsprozess gekoppelt sind.

Zudem ist das erfindungsgemäße Fahrzeugzustandsregelungssystem durch den Vorteil gekennzeichnet, dass es Regelung mit der Wirkung einer Emissionsreduzierung bereitstellt, ohne dass hierfür eine Messung der realen Emissionen des Fahrzeugs erforderlich ist.

Ferner besteht der besondere Vorteil, die antriebsstrangfernen Emissionen voreinstellbar zu limitieren. Abhängig von der Limitierung als primäre Vorgabe wird die unter Wahrung dieses Limits mögliche optimale Fahrdynamik erzielt.

Gemäß einer ersten vorteilhaften Weiterbildung ist das Fahrzeugzustandsregelungssystem als ein System nach SAE Level 2 bis 5 ausgebildet.

Bei dieser Weiterbildung werden die SAE Level wie folgt zu Grunde gelegt:
Bei SAE-Level 2 handelt es sich um eine Teil-Automation. Es erfolgen fahrmodusspezifische Ausführungen von Lenk- und Beschleunigungs- oder Bremsvorgängen durch ein oder mehrere Fahrerassistenzsysteme unter Verwendung von Informationen über die Fahrumgebung und mit der Erwartung, dass der menschliche Fahrer alle verbleibenenden Aspekte der dynamischen Fahraufgabe ausführt.

SAE-Level 3 bezeichnet eine bedingte Automation, gemäß der die fahrmodusspezifische Ausführung aller Aspekte der dynamischen Fahraufgabe durch ein automatisiertes Fahrsystem mit der Erwartung erfolgt, dass der menschliche Fahrer auf eine Anfrage des Fahrsystems angemessen reagieren wird.

Bei SAE-Level 4 liegt ein hohe Automation vor. Hierbei werden alles Aspekte der dynamischen Fahraufgabe durch ein automatisiertes Fahrsystem selbst dann vorgenommen, wenn der menschliche Fahrer auf eine Anfrage das Fahrsystems nicht reagiert.

Bei SAE-Level 5 liegt eine volle Automation vor, bei der eine durchgängige Ausführung aller Aspkete der dynamischen Fahraufgabe durch ein automatisiertes Fahrsystem erfolgt. Dies gilt unter allen Fahr- und Umweltbedingungen, die von einem menschlichen Fahrer bewältigt werden können.

Nach einer anderen Weiterbildung handelt es sich bei dem Fahrzeugsubsystem um ein Bremssystem und/oder ein Reifensystem.

Das Bremssystem und das Reifensystem eines Fahrzeugs sind die Hauptemissionsquellen für antriebsstrangferne Emissionen.

Gemäß dieser Weiterbildung wird durch die Fahrzeugsubsystemerfassungseinheit der Zustandserfassungseinheit mindestens eine physikalische Größe des Bremssystems und/oder des Reifensystems erfasst und als Teil der Zustandsdaten in die Auswertung sowie die Erzeugung von Stellbefehlen einbezogen. Da die Betriebszustände des Bremssystems und des Reifensystems besonders relevant für das Emissionsverhalten sind, wird gemäß dieser Weiterbildung ein besonders hohes Reduzierungspotenzial erreicht. Insbesondere ist es möglich, die Temperatur der Reibungspartner der Bremse zu überwachen und beispielsweise nach einer Gefahrenbremsung mit starker Erhitzung der Reibungspartner präventiv eine reduzierte Fahrgeschwindigkeit einzuregeln, so dass für den Fall einer erneuten starken Bremsbetätigung auch dann kritische Temperaturen der Reibungspartner vermieden werden.

Gemäß einer anderen Weiterbildung ist der Fahrzeugzustand durch das Bremssystem als eine Verzögerung beeinflussbar.

Dieser Weiterbildung liegt zu Grunde, dass das Bremssystem als eine der Hauptemissionsquellen insbesondere bei einem Bremseingriff zum Bewirken einer Verzögerung des Fahrzeugs emissionswirksam wird.

Besonders vorteilhaft ist hierbei möglich, die Stellbefehle so auszubilden, dass die Verzögerung ganz oder teilweise durch einen Generatorbetrieb einer elektrischen Antriebsmaschine bewirkt wird. Ferner können vorteilhaft die Stellbefehle so erzeugt werden, dass hohe Bremsscheibentemperaturen, die zu einer erhöhten Partikelemission führen würden, vermieden werden.

Entsprechend einer anderen Weiterbildung bilden die Steuerungs- und Auswertungseinheit und die Datenbasiseinheit eine Baueinheit. Es handelt sich dabei vorzugsweise um ein Rechnersystem mit integrierten Datenspeichern zur Aufnahme der statischen und veränderlichen Daten. Diese Baueinheit kann bevorzugt Bestandteil eines Steuerungssystem eines Fahrzeugs sein.

Nach einer anderen Weiterbildung sind in die dynamische Datenbasis Daten zu einer Zustandshistorie einschreibbar.

Bei Daten zu einer Zustandshistorie kann es sich beispielsweise um Daten zu den Bremsbetätigungen kurz zurückliegender Zeiträume handeln. Wenn beispielsweise besonders starke Bremsbetätigungen bei gleichzeitig hoher Temperatur der Reibungspartner erfolgt sind, ist von einer thermisch bedingten Oberflächenveränderung insbesondere der Bremsbelege auszugehen. Dies hat Auswirkungen sowohl auf das Bremsverhalten, als auch auf das Emissionsverhalten. Da diese Ursachen-Wirkungsbeziehungen als weitere Daten der Datenbasis hinterlegt sind, kann dies in die Erzeugung der Stellbefehle mit der Wirkung einer Emissionsreduzierung eingehen.

Gemäß einer weiteren vorteilhaften Weiterbildung ist die Steuerungs- und Auswertungseinheit ausgebildet, mittels der Zustandsdaten einen emissionsbezogenen Erfüllungsgrad eines früheren finalen Stellbefehls zu bewerten und mittels des Datenmanagementmoduls die veränderlichen Daten fortzuschreiben.

Diese Weiterbildung ermöglich vorteilhaft die Ausbildung des Fahrzeugszustandsregelungssystem als ein selbstlernendes System. Hiernach wird nach der Ausgabe eines Stellbefehls erfasst, wie sich die Zustandsdaten, insbesondere die Fahrzeugzustandsdaten und die Fahrzeugssubsystemdaten verändert haben. Unter Einbeziehung der Daten und Ursache-Wirkungsbeziehungen kann so mittelbar die Emission und damit der emissionsbezogene Erfüllungsgrad bewertet werden. Diese so erhaltenen zusätzlichen Daten werden dann durch das Datenmanagementmodul in die dynamische Datenbasis als veränderliche Daten eingeschrieben. Auf diese Weise wird der Datenbestand der veränderlichen Daten kontinuierlich optimiert, so dass die Regeleingriffe durch Stellbefehle so erfolgen, dass die Emissionen weiter reduziert werden.

So kann es beispielsweise der Fall sein, dass ein rollwiderstandsoptimierter Fahrzeugreifen zur Erhöhung der Reichweite eines beispielsweise autonom fahrenden, batterieelektrischen Fahrzeuges montiert wird, wobei besonders in Kurvenfahrt die Aufrechterhaltung des Kraftschlusses infolge erhöhter Querbeschleunigung zu einer Erhöhung des Reifenabriebes führen kann. So kann vorteilhafterweise unter Anwendung neuronaler Netze anhand der Fortschreibung der veränderlichen Daten in der dynamischen Datenbasis im Sinne eines lernenden Elementes die Fahrdynamikregelung unter Beachtung von Fahrzustands- und Fahrzeugsystemdaten beispielsweise für den Fall eines Reifen- und/oder Bremsen- und/oder Fahrbahnwechsels, optimiert werden, wobei auch Fahrzeugsubsystemdaten, wie ABS oder ESP, zur Bewertung der jeweiligen Fahrsituation zum Training herangezogen werden. Demnach wird die Fahrdynamikregelung an neue Bedingungen angelernt.

Zur Entscheidungsfindung zur Auswahl eines finalen Stellbefehls werden Informationen über den emissionsbezogenen Nutzen als Reward benötigt, um eine Bewertung der durch eine Stellbefehl bewirkten Aktionen vornehmen zu können. Diese Informationen werden über die Datenbasiseinheit bereitgestellt, die hierfür insbesondere das dynamische Datenbasismodul als lernendes Element aufweist. Die Informationen zum emissionsbezogenen Nutzen können als mathematisches Modell vorliegen, um die aus einer Aktion folgende Partikelfreisetzung wie den Abrieb an Reibungsbremse, Reifen oder Fahrbahn vorherzusagen. Es können Algorithmen des maschinellen Lernens zur Anwendung kommen, welche verzweigte Korrelationen beispielsweise zwischen den tribologischen Eigenschaften, der Belagzusammensetzung und den Umgebungs- und Prüfbedingungen berücksichtigen. Dabei ist es denkbar, die Informationen anzutrainieren.

Die Steuerungs- und Auswertungseinheit kann die durch die Stellbefehle bewirkten Aktion bewerten und berechnen, welcher Vorgang zum größtmöglichen Erfolg führt. Dies ermöglicht es langfristige Verbesserungen der Aktionen zu erzielen. Die vorteilhafte Weiterbildung ermöglicht es zudem aufgrund von Beobachtungen der Umwelt eine auszuführende Aktion auswählt, welche mit einem vordefinierten Standard verglichen und bewertet wird.

Durch die veränderlichen Daten des dynamischen Datenbasismoduls erhält das Fahrzeugzustandsregelungssystem ein Gedächtnis, wodurch es sich den momentanen Zustand der Umwelt einprägen kann. Ist die Umgebung nur noch teilweise beobachtbar, so mit Hilfe der zur Verfügung stehenden Informationen, ein internes Modell des Zustands der Umwelt erstellt werden. Anhand dieses Modell kann die Steuerungs- und Auswertungseinheit optimierte Stellbefehle bereitstellen.

Nach einem weiteren Aspekt betrifft die Erfindung ein Straßenfahrzeug mit einer Reibungsbremse, das ein Fahrzeugzustandsregelungssystem nach einem der vorhergehenden Ansprüche aufweist. **In** Bezug auf das Fahrzeugzustandsregelungssystem als ein Merkmal eines solchen Straßenfahrzeugs wird auf die zugehörigen Beschreibungsabschnitte zu den vorhergehenden Ansprüchen verwiesen.

Ein solche erfindungsgemäßes Straßenfahrzeug weist den besonderen Vorteil auf, dass bereits durch die Regelung der Fahrzeugzustände ohne bauliche Zusatzmaßnahmen die Partikelemission bei dem Betrieb des Straßenfahrzeugs reduziert werden kann.

Ein erfindungsgemäßes Verfahren zur Fahrzeugzustandsregelung mittels eines Fahrzeugzustandsregelungssystems nach einem der Ansprüche 1 bis 7 weist folgende Verfahrensschritte auf:
a) Einschreiben von statischen Daten in das statische Datenbasismodul als Parametrierung,
b) Erfassen von Zustandsdaten durch die Zustandserfassungseinheit und Bereitstellung zur Übertragung,
c) Erhalten von Zustandsdaten von der Zustandserfassungseinheit und von Datenbasisdaten von der Datenbasiseinheit durch die Steuerungs- und Auswertungseinheit,
d) Bereitstellen von alternativen vorläufigen Stellbefehlen und Zuordnen von prädiktiven Emissionskennwerten zu den alternativen vorläufigen Stellbefehlen durch die Steuerungs- und Auswertungseinheit,
e) Errechnen eines Emissionsbudgets einer Fahreinheit aus den Zustandsdaten und aus den Datenbasisdaten,
f) Errechnen von Soll-Emissionskennwerten aus dem Emissionsbudget
g) Auswählen eines finalen Stellbefehls aus den alternativen vorläufigen Stellbefehlen mittels eines Vergleichs der präditiven Emissionskennwerte und der Soll-Emissionskennwerte,
h) Ausgeben des finalen Stellbefehls an eine Aktoreinheit und Beeinflussen eines Fahrzeugzustand,
i) Einschreiben und/oder Löschen von veränderlichen Daten des dynamischen Datenbasismoduls mittels der Datenmanagementeinheit.

Die Beschreibungsinhalte zur der Arbeitsweise des Fahrzeugzustandsregelungssystem geltend ergänzend in entsprechender Weise auch für das erfindungsgemäße Verfahren. Die Buchstabenkennzeichnung der Verfahrensschritte dient der Identifizierung und Benennung und legt keine Reihenfolge fest. Die Reihenfolge der Verfahrensschritte ergibt sich aus der zugehörigen Beschreibung.

Die Verfahrensschritte werden im Einzelnen nachfolgend näher beschrieben.
a) Einschreiben von statischen Daten in das statische Datenbasismodul als Parametrierung.
   In dem Verfahrensschritt a) werden in das statische Datenbasismodul die statischen Daten eingespeichert. Dieser Verfahrensschritt geht einem regulären Betrieb voraus und muss lediglich einmalig durchgeführt werden. Der reguläre Betrieb beginnt dann mit dem nachfolgenden Verfahrensschritt b).
b) Erfassen von Zustandsdaten durch die Zustandserfassungseinheit und Bereitstellung zur Übertragung.
   Die Zustanderfassungseinheit, die durch die Verkehrssituationserfassungseinheit, die Fahrzeugzustandserfassungeinheit und die Fahrzeugsubsystemerfassungseinheit gebildet wird, erfasst in diesem Verfahrensschritt Zustandsdaten wie bespielsweise die Position anderer Verkehrsteilnehmer, die Geschwindigkeit des Fahrzeugs oder den Reifendruck.
c) Erhalten von Zustandsdaten von der Zustandserfassungseinheit und von Datenbasisdaten von der Datenbasiseinheit durch die Steuerungs- und Auswertungseinheit.
   In diesem Verfahrensschritt werden von der Zustandserfassungseinheit die Zustandsdaten und von der Datenbasiseinheit die Datenbasisdaten an die Steuerungs- und Auswertungseinheit übertragen und von dieser erhalten. Damit stehen alle Daten für eine Auswertung zur Verfügung.
d) Bereitstellen von alternativen vorläufigen Stellbefehlen und Zuordnen von Emissionskennwerten zu den alternativen vorläufigen Stellbefehlen durch die Steuerungs- und Auswertungseinheit.
   Im Verfahrensschritt d) wird die Auswertung der Daten durchgeführt und es erfolgt das Bereitstellen der alternativen vorläufigen Stellbefehle. Diesen Stellbefehlen werden zudem prädiktive Emissionskennwerte zugeordnet, aus denen sich die Emissionsauswirkung des betreffenden Stellbefehls ergibt.
e) Errechnen eines Emissionsbudgets einer Fahreinheit aus den Zustandsdaten und den Datenbasisdaten.
   In diesem Verfahrensschritt wird durch das Kalkulationsmodul der Steuerungs- und Auswertungseinheit ein Emissionsbudget errechnet. Es handelt sich bei dem Emissionsbudget um die Summe der Emissionen, die für die betreffende Fahreinheit insgesamt abgegeben werden dürfen. Die Höhe des Emissionsbudgets ergibt sich aus einer Vorgabe, die in der Datenbasiseinheit hinterlegt ist. Diese Vorgabe kann beispielsweise als eine Emissionsmenge pro Kilometer vorgegeben sein oder optional auch von dem Fahrer einstellbar sein.
f) Errechnen von Soll-Emissionskennwerten aus dem Emissionsbudget.
   In diesem Schritt wird eine Aufteilung des Emissionsbudgets auf die einzelnen Fahrereignisse vorgenommen, so dass für jedes Fahrereignis ein Soll-Emissionskennwert gebildet wird. Der Soll-Emissionskennwert gibt an, wie hoch die Emission in dem jeweiligen Fahrereignis maximal sein darf, um in der Summe das Emissionsbudget nicht zu überschreiten.
g) Auswählen eines finalen Stellbefehls aus den alternativen vorläufigen Stellbefehlen mittels eines Vergleichs der prädiktiven Emissionskennwerte und der Soll-Emissionskennwerte.
   Nachfolgend wird im Verfahrensschritt e) aus den mehreren alternativen vorläufigen Stellbefehlen ein Stellbefehl als finaler Stellbefehl ausgewählt, wobei die Auswahl auch auf der Grundlage eines Vergleichs der prädiktiven Emissionskennwerte und der Soll-Emissionskennwerte erfolgt. Somit kann aus mehreren möglichen Stellbefehlen beispielsweise der Stellbefehl als finaler Stellbefehl ausgewählt werden, dessen zugeordneter prädiktiver Emissionskennwert für sich allein betrachtet den entsprechenden Soll-Emissionskennwert nicht überschreitet. Darüber hinaus kann mittels des Vergleichs dieses Verfahrensschritts auch eine Optimierung in der Weise erfolgen, dass ein Stellbefehl zugelassen wird, dessen zugeordneter prädiktiver Emissionskennwert für sich allein betrachtet den entsprechenden Soll-Emissionskennwert übersteigt, wenn dies durch einen oder mehrere andere Stellbefehle mit deren zugeordneten Emissionskennwerten ausgeglichen wird und wenn die Summe der so erzielten Fahrdynamikeinzelresultate größer ist, als die Summe der Fahrdynamikeinzelresultate bei einer Auswahl der Stellbefehle lediglich unter Bewertung jedes Fahrereignisses für sich allein.
h) Ausgeben des finalen Stellbefehls an eine Aktoreinheit und Beeinflussen eines Fahrzeugzustand,
   Der nach den vorhergehenden Verfahrensschritten erzeugte finale Stellbefehl wird im Verfahrensschritt f) an eine Aktoreinheit ausgegeben. Die Aktoreinheit, beispielsweise eine elektrische Antriebsmaschine im Generatorbetrieb, bewirkt eine Veränderung des Fahrzeugzustand, hier beispielsweise als eine Verzögerung zur Reduzierung der Geschwindigkeit.
i) Einschreiben und/oder Löschen von veränderlichen Daten des dynamischen Datenbasismoduls mittels der Datenmanagementeinheit.

In dem Verfahrensschritt g) erfolgt eine Einschreiben und/oder Löschen von veränderlichen Daten. Durch diesen Verfahrensschritt wird der besondere Vorteil des erfindungsgemäßen Verfahrens erreicht, dass neben den statischen Daten auch situationsrelevante veränderliche Daten zur Verfügung stehen, die in die Erzeugung und die Auswahl von Stellbefehlen eingehen und deren Emissionswirkungen weiter optimieren helfen. Zugleich kann dadurch die statische Datenbasis entlastet werden, da hier auf die speicherplatzintensive und mit hohem Erhebungsaufwand verbundene Speicherung besonders komplexer Kennfelder zu emissionsrelevanten Ursache-Wirkungsbeziehungen verzichtet werden kann.

Die Bezeichnung der Verfahrensschritte mit Buchstaben dient der Benennung und legt keine zwingende Reihenfolgen fest. Zur Reihenfolge gilt, dass die Verfahrensschritte a) bis f) in der aufgeführen Reihenfolge durchgeführt werden, während der Verfahrensschritt g) keiner Festlegung der Reihenfolge unterliegt.

In einer vorteilhaften Weiterbildung des Verfahrens erfolgt zunächst das wiederholte Durchführen der Verfahrensschritte a) bis i). Weiterhin weist diese Weiterbildung zusätzlich die folgenden Verfahrensschritte auf:
j) Erfassen von Ist-Emissionskennwerten von in der Fahreinheit bereits ausgegebenen finalen Stellbefehlen,
k) Einbeziehen der Ist-Emissionskennwerte in das Emissionsbudget und Errechnen eines Rest-Emissionsbudgets für eine Rest-Fahreinheit,
l) Errechnen von fortgeschriebenen Soll-Emissionskennwerten aus dem Rest-Emissionsbudget,
m) Auswählen des finalen Stellbefehls aus den alternativen vorläufigen Stellbefehlen mittels eines Vergleichs der prädiktiven Emissionskennwerte mit den fortgeschriebenen Soll-Emissionskennwerten.

Die hier vorliegende vorteilhafte Weiterbildung des Verfahrens ist dadurch gekennzeichnet, dass eine fortlaufend erneute Emissionsbudgetberechnung erfolgt, indem das bereits verbrauchte Emissionsbudget von dem anfänglich errechneten Emissionsbudget abgezogen und dass sich so ergebende Rest-Emissionsbudget auf die Fahrereignisse der Rest-Fahreinheit aufgeteilt wird. Dem liegt zu Grunde, dass teilweise auch Stellbefehle mit entsprechend zugehörigen Ist-Emissionskennwerten ausgewählt werden müssen, die bei erstmaliger Durchführung der Verfahrensschritte d) bis h) nicht einbeziehbar waren, weil sie sich beispielsweise aus unvorhersehbaren Zustandsdaten, insbesondere unvorhersehbaren Verkehrszustandsdaten herleiten. Dies kann beispielsweise eine Gefahrenbremsung wegen eines auf die Fahrbahn tretenden Fußgängers sein. Umgekehrt können in besonderen Fällen auch niedrigere Ist-Emissionskennwerte vorliegen, wenn beispielsweise eine verkehrsbedingte Langsamfahrt erfolgt. In diesem Fall besteht ein Emissionsguthaben, dass für die Fahrereignisse der Rest-Fahreinheit zugunsten jeweils höherer Fahrdynamikeinzelresultate eingesetzt werden kann.

Die aufgeführten zusätzlichen Verfahrensschritte der vorteilhaften Weiterbildung werden im Einzelnen nachfolgend näher beschrieben.
j) Erfassen von Ist-Emissionskennwerten von in der Fahreinheit bereits ausgegebenen finalen Stellbefehlen.

Im Verfahrensschritt j) wird erfasst, welche Emissionen während der Fahreinheit bereits verursacht wurden. Erfindungsgemäß erfolgt dies als besonderer Vorteil nicht durch reale Messungen, sondern anhand der prädiktiven Emissionskennwerte, die den ausgegebenen finalen Stellbefehlen zugeordnet sind. Als Ist-Emissionskennwerte im Sinne der vorliegenden Erfindung werden daher die prädiktiven Emissionskennwerte der Stellbefehle verstanden, die tatsächlich zur Ausführung gekommen sind.
k) Einbeziehen der Ist-Emissionskennwerte in das Emissionsbudget und Errechnen eines Rest-Emissionsbudgets für eine Rest-Fahreinheit.

Gemäß Verfahrensschritt k) werden die Ist-Emissionskennwerte von dem Emissionsbudget abgezogen, so dass sich dann ein Rest-Emissionsbudget ergibt, welches für die Rest-Fahreinheit zur Verfügung steht. Die Rest-Fahreinheit ist die Summe der Fahrereignisse, die nach Abzug der bereits ausgeführten Fahrereignisse der Fahreinheit verbleiben. Das Rest-Emissionsbudget ist somit die Grundlage für eine Planungsfortschreibung, die eine Adjustierung unvorhergesehener Emissionsabweichungen der bereits ausgeführten Fahrereignisse ermöglicht.
l) Errechnen von fortgeschriebenen Soll-Emissionskennwerten aus dem Rest-Emissionsbudget.

Der Verfahrensschritt I) entspricht dem Grunde nach dem Verfahrensschritt f), wobei allerdings die Grundlage der Errechnung der Soll-Emissionskennwerte nur noch das Rest-Emissionsbudget ist. Als fortgeschriebene Soll-Emissionskennwerte werden solche Emissionskennwerte verstanden, deren Berechnungsgrundlage ein Rest-Emissionsbudget ist. Im Übrigen gelten die Beschreibungsinhalte zu Verfahrensschritt f) hier in entsprechender Weise.
m) Auswählen des finalen Stellbefehls aus den alternativen vorläufigen Stellbefehlen mittels eines Vergleichs der prädiktiven Emissionskennwerte mit den fortgeschriebenen Soll-Emissionskennwerten.

Der Verfahrenschritt m) entspricht dann dem Grunde nach dem Verfahrensschritt g), wobei sich der hierbei durchzuführende Vergleich auf die prädiktiven Emissionskennwerte der Stellbefehle für die Rest-Fahreinheit und auf die fortgeschriebenen Soll-Emissionskennwerte bezieht. Im Übrigen gelten die Beschreibungsinhalte zu Verfahrensschritt g) hier in entsprechender Weise.

Nachfolgend wird der Verfahrenschritte h) ausgeführt.

Die Erfindung wird als Ausführungsbeispiel anhand von
- Fig. 1: Blockschaltbild des Fahrzeugregelungssystems
- Fig. 2: Blockschaltbild des Fahrzeugregelungssystems mit Bremssystem als Fahrzeugssubsystem
näher erläutert.

Die Verwendung der Bezugszeichen in den Figuren und in den zugehörigen Beschreibungsabschnitten erfolgt nachfolgend übereinstimmend und auch dann, wenn nicht alle Figuren mit allen Bezugszeichen versehen sind.

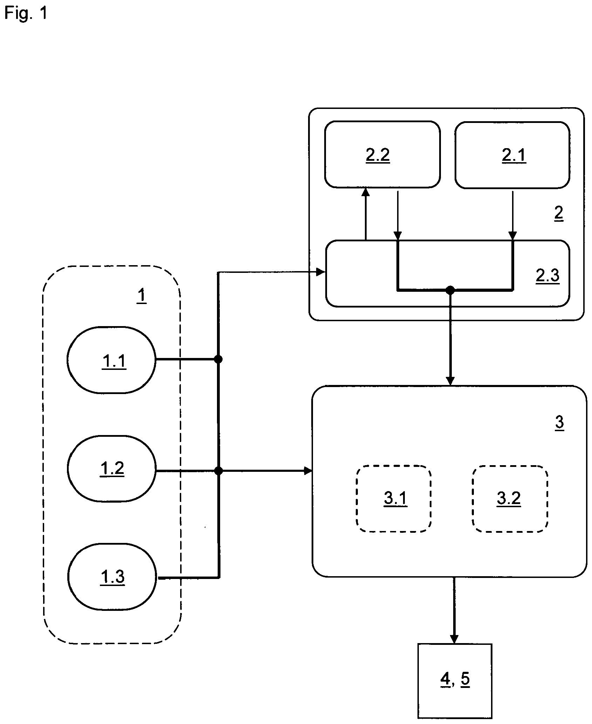

Figur 1 zeigt ein Ausführungsbeispiel eines erfindungsgemäßen Fahrzeugregelungssystems in einem Blockschaltbild.

Die Auswertungseinheit 3 und die Datenbasiseinheit 2 sind als eine elektronische Schaltung eines Rechners mit Prozessor und Datenspeicher in einer Baueinheit zusammengefasst. Dabei sind in dem statischen Datenbasismodul 2.1 statische Daten hinterlegt. Ferner weist die Datenbasiseinheit 2 das dynamische Datenbasismodul 2.2 auf. Das Datenmanagementmodul 2.3 steuert sowohl das Einschreiben von veränderlichen Daten in das dynamische Datenbasismodul 2.2 als auch das Auslesen von statischen Daten aus dem statischen Datenbasismodul 2.1 und von veränderlichen Daten aus dem dynamischen Datenbasismodul 2.2, so dass sowohl statische als auch veränderliche Daten als Datenbasisdaten für die Steuerungs- und Auswertungseinheit 3 zur Verfügung stehen.

Daneben liegt eine baulich verteilte Zustandserfassungseinheit 1 vor, die eine Verkehrszustandserfassungseinheit 1.1, eine Fahrzeugzustandserfassungseinheit 1.2 sowie eine Fahrzeugsubsystemerfassungseinheit 1.3 aufweist. Durch die Zustandserfassungseinheit werden insbesondere Daten zum Abstand und zur Relativgeschwindigkeit zu anderen Verkehrteilnehmern, zur eigenen Geschwindigkeit, zu Temperaturen von Reifen und der Bremse sowie weitere Daten wie bespielsweise Positions- oder Navigationsdaten als Zustandsdaten erfasst. Über die Datenverbindung erhält die Steuerungs- und Auswertungseinheit 3 erhält diese Zustandsdaten.

Somit stehen der Steuerungs- und Auswertungseinheit 3 sowohl die Datenbasisdaten als auch die Zustandsdaten für die Auswertung, für die Bestimmung der Fahrereignisse einer Fahreinheit - also einer Fahrstrecke - und für die Bereitstellung von möglichen vorläufigen Stellbefehlen zur Verfügung.

Die Steuerungs- und Auswertungseinheit 3 ermittelt vorläufige alternative Stellbefehle und ordnet diesen als prädiktive Emissionskennwerte eine Angabe zu, welche Emissionen bei der Ausführung des betreffenden Stellbefehls zu erwarten sind.

Die Steuerungs- und Auswertungseinheit 3 weist als eine wichtige Komponente ein Kalkulationsmodul 3.1 auf. Das Kalkulationsmodul 3.1 errechnet im

Ausführungsbeispiel ausgehend von einem vorgegebenen Startpunkt und einem vorgegebenen Zielpunkt anhand der Zustandsdaten und der Datenbasisdaten eine Fahrstrecke und die zu dieser Fahrstrecke zugehörigen Fahrereignisse. Weiterhin ist im Ausführungsbeispiel eine zulässige kilometerbezogene Emissionsmenge hinterlegt. Anhand der Fahrstecke wird das Emissionsbudget errechnet und auf die Fahrereignisse aufgeteilt, so dass sich Soll-Emissionskennwerte für die vorläufigen alternativen Stellbefehle ergeben.

Die Steuerungs- und Auswertungseinheit 3 weist zudem ein Bewertungsmodul 3.2 auf, welches in einem Vergleich der prädiktiven Emissionskennwerte und der Soll-Emissionskennwerte Zielerreichungsgrade in Bezug auf die Emissionen und die Fahrdynamik in einer Gesamtbewertung der Fahrereignisse für die gesamte Fahreinheit gewichtet, so dass aus den vorläufigen Stellbefehlen ein finaler Stellbefehl ausgewählt und dann ausgegeben werden kann. Der finale Stellbefehl optimiert die unterschiedlichen Zielerreichungsgrade unter Sicherstellung der Vorgabe, dass die Gesamtheit der einzelen Emissionen der Fahrereignisse das Emissionsbudget nicht überschreitet, wobei die Verteilung der Emissionen so erfolgt, dass ein bestmögliches Fahrdynamikgesamtresultat erreicht wird.

Der finale Stellbefehl wirkt auf die Aktoreinheit 4.

Neben der Steuerungs- und Auswertungseinheit 3 ist auch das Datenmanagementmodul 2.3 mit der Zustandserfassungseinheit 1 datenverbunden und kann so das Einschreiben von veränderlichen, insbesondere nur temporär relevanten Daten aus den Zustandsdaten in das dynamische Datenbasismodul 2.2 bereitstellen. Damit sorgt das Datenmanagement stets für eine aktuellen Bestand solcher veränderlicher Daten, die für die Bereitstellung von Stellbefehlen und Emissionskennwerten relevant sein können.

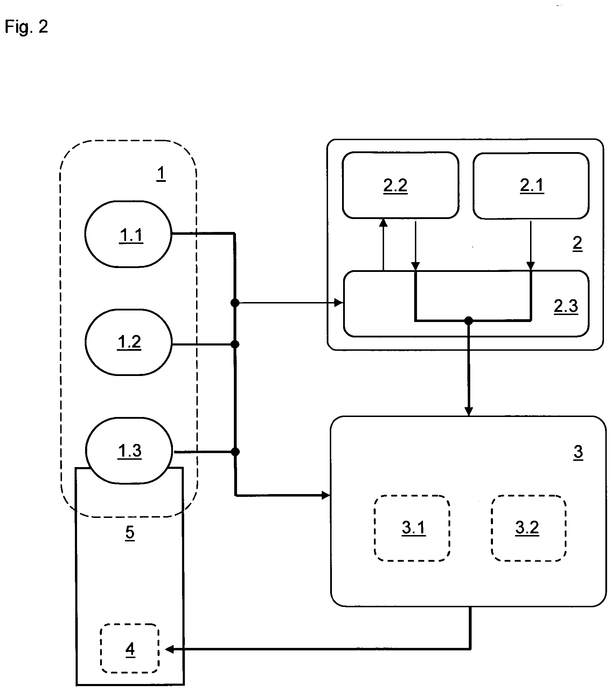

Figur 2 zeigt ein modifiziertes Ausführungsbeispiel des Fahrezeugzustandssteuerungssystems.

Es entspricht überwiegend dem Ausführungsbeispiel nach Fig. 1, so dass auf diese Beschreibungsinhalte Bezug genommen wird.

Der finale Stellbefehl wirkt auf die Aktoreinheit 4, die im Ausführungsbeispiel gemäß Fig. 2 als Teil eines Bremssystems 5 ausgebildet ist. Das Bremssystem 5 stellt zugleich ein Fahrzeugsubsystem dar, von dem durch eine Fahrzeugsubsystemerfassungseinheit 1.3 Fahrzeugsubsystemzustandsdaten aufgenommen werden.

Ein erstes Ausführungsbeispiel des erfindungsgemäßen Verfahrens betrifft eine KurvenfahrtFahreinheit, die zur Vereinfachung als Fahrereignisse eine Gradeausfahrt, eine Kurvenfahrt und dann wieder eine Geradeausfahrt aufweist.

Entscheidend für den Verschleiß eines Reifens sind die wirkenden Kräfte, welche in Abhängigkeit von der Fahrsituation auftreten.

Für den Fall einer Geradeausfahrt entstehen zwischen den Reifen und der Fahrbahn zu übertragende Kräfte im Wesentlichen ausschließlich durch Beschleunigungen, die als Beschleunigung im engeren Sinne und als Verzögerung vorliegend können.

Für den Fall einer Kurvenfahrt entsteht durch die Zentripedalbeschleunigung eine Seitenkraft, welche insbesondere von der Fahrzeuggeschwindigkeit, dem Kurvenradius und der Fahrzeugmasse beeinflusst wird. Die Trägheitskraft ist der Fahrzeugbeschleunigung entgegengesetzt. Damit das Fahrzeug den Kurvenradius in Abhängigkeit der vom Fahrer oder im Falle des automatisierten oder autonomen Fahrens vom Fahrzeug vorgegebenen Geschwindigkeit durchfahren kann, sind am Vorder- und Hinterrad Seitenführungskräfte zu übertragen, welche wiederum vom Schräglaufwinkel, Radlast, Schlupf, Reibwert und auch dem Radsturz beeinflusst werden. Verbunden mit der Kraftübertragung ist ein Anstieg der reifenbedingten Emission und der Reifenverschleißrate.

Damit wird deutlich, dass die vom Reifen zu übertragenden Kräfte und die damit korrelierende Verschleißrate umso größer sind, je stärker ein Fahrzeug beschleunigt und verzögert sowie je schneller ein Fahrzeug eine Kurve durchfährt. Zusätzlich treten bei einem starken Verzögern Emissionen durch die hierfür erforderliche Betätigung einer Reibungsbremse auf, was bei einer Beschleunigung nicht der Fall ist.

Hierfür werden vor dem Beginn des Fahrbetriebs im Verfahrensschritt a) die vorstehend dargestellten Ursache- Wirkungsbeziehungen neben anderen Daten in das statische Datenbasismodul 2.1 der Datenbasiseinheit 2 eingeschrieben und stehen so für eine Auswertung zur Verfügung.

Weitere für die Auswertung und Entscheidungsfindung erforderliche Informationen werden im Verfahrensschritt b) als Zustandsdaten durch die Zustandserfassungseinheit 1 erfasst und bereitgestellt. Hierbei handelt es sich in dem Ausführungsbeispiel insbesondere um Daten über die Charakteristik der zu durchfahrenden Kurve, die als Navigationsdaten aus Kartenmaterial oder aus den Streckeninformationen gewonnen werden. Konkret handelt es sich beispielsweise um Informationen über den Kurvenradius, die zulässige Höchtsgeschwindigkeit und die Fahrbahnbeschaffenheit. Die Bestimmung der Fahrzeugposition kann über GPS erfolgen. Als Information über den Reifen als Fahrzeugsubsystem dient beispielhaft der Reifenluftdruck, welcher mittels geeigneter Sensorik der betreffenden Fahrzeugsubsystemerfassungseinheit 1.3 bestimmt wird. Weiterhin können als Verkehrszustanddaten beispielsweise Informationen zu einem vorausfahrenden Fahrzeug, beispielsweise mittels Radar erfasst, bereitgestellt werden.

Die Steuerungs- und Auswertungseinheit 3 erhält somit im Verfahrensschritt c) sowohl Datenbasisdaten von der Datenbasiseinheit 2, insbesondere zu den Ursache-Wirkungsbeziehungen, als auch Zustandsdaten von der Zustandserfassungseinheit 1.

Auf dieser Grundlage erfolgt die Auswertung und das Bereitstellen von alternativen vorläufigen Stellbefehlen unter Zuordnung von pädiktiven Emissionskennwerten durch die Steuerungs- und Auswertungseinheit 3 im Verfahrensschritt d). Alternative vorläufige Stellbefehle werden im Ausführungsbeispiel wie folgt ermittelt.

Für die Geradeausfahrten wird als erste mögliche Stellbefehlsabfolge eine moderate Beschleunigung bis zu einer moderaten Geschwindigkeit, konstante Beibehaltung der moderaten Geschwindigkeit und dann eine moderate Verzögerung unter Betätigung der Reibungsbremse bis zum Erreichen des Kurvenabschnitts ermittelt. Als zweite mögliche Stellbefehlsabfolge wird eine stärkere Beschleunigung bis zu einer höheren Geschwindigkeit und nachfolgend ohne Phase einer konstanten Geschwindigkeitsbeibehaltung eine schwache Verzögerung unter Rekuperation und ohne Betätigung der Reibungsbremse ermittelt. Jedem der möglichen Stellbefehle wird auf der Grundle der in Datenbasisdaten eine anzunehmende Emissionsmenge als prädiktiver Emissionskennwert zugeordnet.

Für die Kurvenfahrt wird als ein erster möglicher Stellbefehle eine Betätigung der Reibungsbremse vor dem Erreichen der Kurve zur Reduzierung der Geschwindigkeit ermittelt. Als ein zweiter möglicher Stellbefehl wird eine Kurvenfahrt ohne vorherige Geschwindigkeitsreduzierung ermittelt. Im Fall des ersten Stellbefehls wird aufgrund der hinterlegten Ursache- Wirkungsbeziehungen zu erwartende Partikelemission der Reibungsbremse sowie die bei der reduzierten Kurvenfahrtgeschwindigkeit zu erwartende Emission durch Reifenabrieb errechnet und als prädiktiver Emissionskennwert dem ersten Stellbefehl zugeordnet. Im Fall des zweiten Stellbefehls entfällt die Partikelemission durch die Reibungsbremse; dafür liegt eine erhöhte Emission durch Reifenabrieb wegen der höheren Kurvenfahrtgeschwindigkeit vor. Dies wird als Emissionskennwert dem zweiten Stellbefehl zugeordnet.

Ferner wird durch das Kalkulationsmodul 3.1 im Verfahrensschritt e) für die gesamte Fahreinheit ein Emissionsbudget errechnet, welches sich im vorliegenden Ausführungsbeispiel vereinfacht aus der Streckenlänge und einer hinterlegten Emissionsmenge pro Kilometer ergibt. Ausgehend von dem Emissionsbudget, welches für alle Fahrereignisse zur Verfügung steht, wird im Verfahrensschritt f) eine Aufteilung auf die Fahrereignisse vorgenommen, so dass Soll-Emissionskennwerte vorliegen.

Ein Vergleich der ermittelten Soll-Emissionskennwerte und der prädiktiven Emissionskennwerte der ermittelten alternativen vorläufigen Stellbefehle ergibt im Verfahrensschritt g), welche Stellbefehle die zugeordneten prädiktiven Emissionskennwerte aufweisen, die die Soll-Emissionskennwerte nicht überschreiten.

Je nach Ergebnis des Vergleichs der Emissionskennwerte erfolgt ferner im Verfahrensschritt g) durch die Steuerungs- und Auswertungseinheit das Auswählen des finalen Stellbefehls aus den dargestellten jeweils möglichen Stellbefehlen sowohl für die Geradeausfahrt als auch für die Kurvenfahrt.

Weiterhin wird in dem Ausführungsbeispiel bei dem Vergleich ferner ein Fahrdynamikkennwert den vorläufigen alternativen Stellbefehlen zugeordnet. Hier erfolgt dann zusätzlich ein Vergleich mittels des Verhältnisses der Emissionskennwerte zu den Fahrdynamikkennwerten. In die Auswahl der finalen Stellbefehle wird einbezogen, welche Stellbefehle die in der Summe höchsten Fahrdynamikkennwerte erreichen und gleichzeitig in der Summe ihrer prädiktiven Emissionskennwerte das Emissionsbudget einhalten. Hierbei können einzelne prädiktive Emissionskennwerte die entsprechenden Soll-Emissionskennwerte überschreiben, indem dies durch Unterschreitung anderer prädiktiver Emissionskennwerte gegenüber den betreffenden Soll-Emissionskennwerten ausgeglichen wird. So kann beispielsweise eine höhere Emission durch starkes Beschleunigen, das zu einer hohen Fahrdynamik führt, durch geringere Emissionen durch eine schwächeres Verzögern über eine längere Weglänge und eine anschließende langsamere Kurvenfahrt ohne zusätzlichen Bremseingriff ausgeglichen werden, wobei sich insgesamt ein besseres Fahrdynamikgesamtresultat ergibt.

Weiterhin wird bei der Auswahl der finalen Stellbefehle berücksichtigt, ob beispielsweise die Verursachung von Partikelemissionen durch die Reibungsbremse durch eine geringere Reifenabriebemission teil-, voll- oder überkompensiert wird. Liegt eine beispielsweise eine Überkompensation vor, wird als finaler Stellbefehl der Stellbefehl zur Reibungsbremsenbetätigung zur Geschwindigkeitsreduzierung ausgewählt. Umgekehrt wird bei einer Teilkompensation als finaler Stellbefehl der Stellbefehl ohne Bremsbetätigung ausgewählt. Im Falle einer Vollkompensation liegt praktisch eine Emissionsneutralität zwischen den möglichen Stellbefehlen vor; daher wird von der Steuerungs- und Auswertungseinheit zugunsten der besseren Zielerreichungsgrades in Bezug auf eine geringe Fahrzeit, also einer hohen Fahrdynamik, ebenfalls als finaler Stellbefehl der Stellbefehl ohne Bremsbetätigung ausgewählt. In einer Modifikation dieses Auswertungsbeispiels ist zudem in dem Bewertungsmodul 3.2 ein Schwellwert oder eine Kennlinie hinterlegt, in welchem Maße eine geringfügig erhöhte Emission zugunsten einer wesentlich besseren Fahrdynamik bei der Auswahl des finalen Stellbefehls in Kauf genommen wird.

Der finale Stellbefehl wird dann im Verfahrensschritt h) als Steuerbefehl an das Bremssystem übertragen und bewirkt so im Falle einer Bremsbetätigung eine Veränderung des Fahrzeugzustands durch Verzögerung.

In dem Ausführungsbeispiel wird also die Fahrzeuggeschwindigkeit, mit welcher die Querbeschleunigung und die reifenbezogene Emissionsrate korreliert, bei der Kurvenfahrt unter Einbeziehung der verfügbaren Informationen verschleiß-, emissions- und fahrdynamikoptimal bestimmt.

### Verwendete Bezugszeichen

- 1: Zustandserfassungseinheit
- 1.1: Verkehrzustandserfassungseinheit
- 1.2: Fahrzeugszustandserfassungseinheit
- 1.3: Fahrzeugsubsystemerfassungseinheit
- 2: Datenbasiseinheit
- 2.1: statisches Datenbasismodul
- 2.2: dynamisches Datenbasismodul
- 2.3: Datenmanagementmodul
- 3: Steuerungs- und Auswertungseinheit
- 3.1: Kalkulationsmodul
- 3.2: Bewertungsmodul
- 4: Aktoreinheit
- 5: Bremssystem

## Patentansprüche

1. Fahrzeugzustandsregelungssystem,
aufweisend eine Zustandserfassungseinheit (1), eine Datenbasiseinheit (2) und eine Steuerungs- und Auswertungseinheit (3),
wobei die Zustandserfassungseinheit (1) ausgebildet ist, Zustandsdaten bereitzustellen und wobei die Zustandsdaten als Verkehrszustandsdaten, Fahrzeugzustandsdaten oder Fahrzeugsubsystemdaten vorliegen, wobei die Zustandserfassungseinheit aufweist eine Verkehrssituationserfassungseinheit (1.1) die ausgebildet ist, die Verkehrszustandsdaten zu erfassen und übertragbar bereitzustellen, eine Fahrzeugzustandserfassungseinheit (1.2) die ausgebildet ist, die Fahrzeugzustandsdaten zu erfassen und übertragbar bereitzustellen, eine Fahrzeugsubsystemerfassungseinheit (1.3) die ausgebildet ist, die Fahrzeugsubsystemdaten zu erfassen und übertragbar bereitzustellen,
wobei die Datenbasiseinheit (2) mit der Zustandserfassungseinheit (1) datenverbunden ist und ein statisches Datenbasismodul (2.1) aufweist,
**dadurch gekennzeichnet,**
**dass** die Datenbasiseinheit (2) ferner ein dynamisches Datenbasismodul (2.2) und ein Datenmanagementmodul (2.3) aufweist,
**dass** das statische Datenbasismodul (2.1) statische Daten zu Ursache-Wirkungsbeziehungen zu antriebsstrangfernen Emissionen aufweist, dass das dynamische Datenbasismodul (2.2) veränderliche Daten zu antriebsstrangfernen Emissionen aufweist,
**dass** das Datenmanagementmodul (2.3) ausgebildet ist, die veränderlichen Daten in das dynamische Datenbasismodul (2.2) einzuschreiben oder zu löschen und zudem ausgebildet ist, die statischen Daten aus dem statischen Datenbasismodul (2.1) und die veränderlichen Daten aus dem dynamischen Datenbasismodul (2.2) abzurufen und als Datenbasisdaten übertragbar bereitzustellen,
**dass** die Steuerungs- und Auswertungseinheit (3) mit der Zustandserfassungseinheit (1) und der Datenbasiseinheit (2) datenverbunden sowie ausgebildet ist, von der Zustandserfassungseinheit (1) die Zustandsdaten und von der Datenbasiseinheit (2) die Datenbasisdaten zu erhalten und aus den Zustandsdaten und den Datenbasisdaten alternative vorläufige Stellbefehle bereitzustellen, wobei den alternativen vorläufigen Stellbefehlen prädiktive Emissionskennwerte zu antriebsstrangfernen Emissionen zugeordnet sind,
**dass** die Steuerungs- und Auswertungseinheit ein Kalkulationsmodul (3.1) aufweist das ausgebildet ist, aus den Zustandsdaten und den Datenbasisdaten ein Emissionsbudget zu antriebstrangfernen Emissionen einer Fahreinheit zu errechnen und mittels des Emissionsbudgets Soll-Emissionskennwerte zu antriebsstrangfernen Emissionen für die vorläufigen alternativen Stellbefehle zu ermitteln,
**dass** die Steuerungs- und Auswertungseinheit ein Bewertungsmodul (3.2) aufweist das ausgebildet ist, mittels eines Vergleichs der prädiktiven Emissionskennwerte mit den Soll-Emissionskennwerten aus den alternativen vorläufigen Stellbefehlen einen finalen Stellbefehl auszuwählen und dass die Steuerungs- und Auswertungseinheit ausgebildet ist, den finalen Stellbefehl an eine Aktoreinheit (4) auszugeben, wobei mittels der Aktoreinheit (4) ein Fahrzeugzustand beeinflussbar ist.

2. Fahrzeugzustandsregelungssystem nach Anspruch 1,
**dadurch gekennzeichnet,**
**dass** es als ein System nach SAE Level 2 bis 5 ausgebildet ist.

3. Fahrzeugzustandsregelungssystem nach Anspruch 1 und 2,
**dadurch gekennzeichnet,**
**dass** es sich bei dem Fahrzeugsubsystem um ein Bremssystem (5) und/oder ein Reifensystem handelt.

4. Fahrzeugzustandsregelungssystem nach einem der vorhergehenden Ansprüche,
**dadurch gekennzeichnet,**
**dass** der Fahrzeugzustand durch das Bremssystem (5) als eine Verzögerung beeinflussbar ist.

5. Fahrzeugzustandsregelungssystem nach einem der vorhergehenden Ansprüche,
**dadurch gekennzeichnet,**
**dass** die Steuerungs- und Auswertungseinheit (3) und die Datenbasiseinheit (2) eine Baueinheit bilden.

6. Fahrzeugzustandsregelungssystem nach einem der vorhergehenden Ansprüche,
**dadurch gekennzeichnet,**
**dass** in die dynamische Datenbasis (2.2) Daten zu einer Zustandshistorie einschreibbar sind.

7. Fahrzeugzustandsregelungssystem nach einem der vorhergehenden Ansprüche,
**dadurch gekennzeichnet,**
**dass** die Steuerungs- und Auswertungseinheit (3) ausgebildet ist, mittels der Zustandsdaten einen emissionsbezogenen Erfüllungsgrad eines früheren finalen Stellbefehls zu bewerten und mittels des Datenmanagementmoduls (2.3) die veränderlichen Daten fortzuschreiben.

8. Straßenfahrzeug,
aufweisend ein Fahrzeugregelungssystem nach einem der vorhergehenden Ansprüche und aufweisend eine Reibungsbremse.

9. Verfahren zur Fahrzeugzustandsregelung mittels eines Fahrzeugzustandsregelungssystems nach einem der Ansprüche 1 bis 7, aufweisend folgende Verfahrensschritte:
a) Einschreiben von statischen Daten in das statische Datenbasismodul (2.1) als Parametrierung,
b) Erfassen von Zustandsdaten durch die Zustandserfassungseinheit (1) und Bereitstellung zur Übertragung,
c) Erhalten von Zustandsdaten von der Zustandserfassungseinheit (1) und von Datenbasisdaten von der Datenbasiseinheit (2) durch die Steuerungs- und Auswertungseinheit (3),
d) Bereitstellen von alternativen vorläufigen Stellbefehlen und Zuordnen von prädiktiven Emissionskennwerten zu antriebsstrangfernen Emissionen zu den alternativen vorläufigen Stellbefehlen durch die Steuerungs- und Auswertungseinheit (3),
e) Errechnen eines Emissionsbudgets zu antriebsstrangfernen Emissionen einer Fahreinheit aus den Zustandsdaten und aus den Datenbasisdaten,
f) Errechnen von Soll-Emissionskennwerten zu antriebstrangfernen Emissionen aus dem Emissionsbudget,
g) Auswählen eines finalen Stellbefehls aus den alternativen vorläufigen Stellbefehlen mittels eines Vergleichs der prädiktiven Emissionskennwerte und der Soll-Emissionskennwerte,
h) Ausgeben des finalen Stellbefehls an eine Aktoreinheit (4) und Beeinflussen eines Fahrzeugzustands,
i) Einschreiben und/oder Löschen von veränderlichen Daten des dynamischen Datenbasismoduls (2.2) mittels der Datenmanagementeinheit (2.3).

10. Verfahren zur Fahrzeugzustandsregelung nach Anspruch 9, aufweisend das wiederholte Durchführen der Verfahrensschritte a) bis i) und
aufweisend folgende zusätzliche Verfahrensschritte:
j) Erfassen von Ist-Emissionskennwerten zu antriebsstrangfernen Emissionen von in der Fahreinheit bereits ausgegebenen finalen Stellbefehlen,
k) Einbeziehen der Ist-Emissionskennwerte in das Emissionsbudget und Errechnen eines Rest-Emissionsbudgets zu antriebsstrangfernen Emissionen für eine Rest-Fahreinheit,
I) Errechnen von fortgeschriebenen Soll-Emissionskennwerten zu antriebsstrangfernen Emissionen aus dem Rest-Emissionsbudget,
m) Auswählen des finalen Stellbefehls aus den alternativen vorläufigen Stellbefehlen mittels eines Vergleichs der prädiktiven Emissionskennwerte mit den fortgeschriebenen Soll-Emissionskennwerten.

## Claims

1. Vehicle state control system,
comprising a state detection unit (1), a database unit (2) and a control and evaluation unit (3),
the state detection unit (1) being designed to provide state data and the state data being present as traffic state data, vehicle state data or vehicle subsystem data,
the state detection unit comprising
a traffic situation detection unit (1.1) which is designed to capture the traffic state data and to provide them in a transmittable manner,
a vehicle state detection unit (1.2) which is designed to capture the vehicle state data and to provide them in a transmittable manner,
a vehicle subsystem detection unit (1.3) which is designed to capture the vehicle subsystem data and to provide them in a transmittable manner,
the database unit (2) being connected to the state detection unit (1) for transmitting data and having a static database module (2.1),
**characterized**
**in that** the database unit (2) further comprises a dynamic database module (2.2) and a data management module (2.3),
**in that** the static database module (2.1) has static data on cause-effect relationships for emissions not associated with the drivetrain,
**in that** the dynamic database module (2.2) contains variable data on emissions not associated with the drivetrain,
**in that** the data management module (2.3) is designed to write the variable data into the dynamic database module (2.2) or to delete the variable data and is also designed to retrieve the static data from the static database module (2.1) and the variable data from the dynamic database module (2.2) and to provide them as transmittable database data,
**in that** the control and evaluation unit (3) is connected to the state detection unit (1) and the database unit (2) for transmitting data and is designed to receive the state data from the state detection unit (1) and the database data from the database unit (2) and to provide alternative provisional control commands from the state data and the database data, predictive emission parameters for emissions not associated with the drivetrain being assigned to the alternative provisional control commands,
**in that** the control and evaluation unit has a calculation module (3.1) which is designed to calculate an emissions budget for emissions of a driving unit not associated with the drivetrain from the status data and the database data and to use the emissions budget to determine target emission parameters for emissions not associated with the drivetrain for the provisional alternative control commands,
**in that** the control and evaluation unit has an evaluation module (3.2) which is designed to select a final control command from the alternative preliminary control commands by means of a comparison of the predictive emission parameters with the target emission parameters
**and in that** the control and evaluation unit is designed to output the final control command to an actuator unit (4), a vehicle state being able to be influenced by means of the actuator unit (4).

2. Vehicle state control system according to claim 1,
**characterized in that**
it is designed as a system according to SAE Level 2 to 5.

3. Vehicle state control system according to claims 1 and 2,
**characterized in that**
the vehicle subsystem is a braking system (5) and/or a tire system.

4. Vehicle state control system according to any of the preceding claims,
**characterized in that**
the vehicle state can be influenced by the braking system (5) as a deceleration.

5. Vehicle state control system according to any of the preceding claims,
**characterized in that**
the control and evaluation unit (3) and the database unit (2) form a structural unit.

6. Vehicle state control system according to any of the preceding claims,
**characterized in that**
data on a state history can be written into the dynamic database (2.2).

7. Vehicle state control system according to any of the preceding claims,
**characterized in that**
the control and evaluation unit (3) is designed to evaluate an emissions-related degree of fulfillment of an earlier final control command by means of the status data and to update the variable data by means of the data management module (2.3).

8. Road vehicle,
comprising a vehicle control system according to any of the preceding claims and comprising a friction brake.

9. Method for vehicle state control by means of a vehicle state control system according to any of claims 1 to 7, comprising the following method steps:
a) writing static data into the static database module (2.1) as parameterization,
b) capturing state data by the state detection unit (1) and providing them for transmission,
c) obtaining state data from the state detection unit (1) and database data from the database unit (2) by the control and evaluation unit (3),
d) providing alternative provisional control commands and assigning predictive emission parameters for emissions not associated with the drivetrain to the alternative provisional control commands by the control and evaluation unit (3),
e) calculating an emissions budget for emissions of a driving unit not associated with the drivetrain from the status data and from the database data,
f) calculating target emission parameters for emissions not associated with the drivetrain from the emissions budget,
g) selecting a final control command from the alternative preliminary control commands by means of a comparison of the predicted emission parameters and the target emission parameters,
h) outputting the final control command to an actuator unit (4) and influencing a vehicle state,
i) writing in and/or deleting variable data of the dynamic database module (2.2) by means of the data management unit (2.3).

10. Method for vehicle state control according to claim 9,
comprising repeatedly carrying out method steps a) to i) and
comprising the following additional method steps:
j) capturing actual emission parameters for emissions not associated with the drivetrain from final control commands that have already been issued in the driving unit,
k) incorporating the actual emission parameters into the emissions budget and calculating a residual emissions budget for emissions not associated with the drivetrain for a residual driving unit,
l) calculating updated target emission parameters for emissions not associated with the drivetrain from the residual emissions budget,
m) selecting the final control command from the alternative preliminary control commands by means of a comparison of the predictive emission parameters with the updated target emission parameters.

## Revendications

1. Système de régulation d'état du véhicule,
présentant une unité de détection d'état (1), une unité formant base de données (2) et une unité de commande et d'évaluation (3),
dans lequel l'unité de détection d'état (1) est configurée pour mettre à disposition des données d'état et dans lequel les données d'état sont présentes sous forme de données d'état de la circulation, de données d'état du véhicule ou de données de sous-système du véhicule,
dans lequel l'unité de détection d'état présente
une unité de détection de situation de la circulation (1.1) qui est configurée pour détecter les données d'état de la circulation et les mettre à disposition de manière transmissible,
une unité de détection d'état du véhicule (1.2) qui est configurée pour détecter les données d'état du véhicule et les mettre à disposition de manière transmissible,
une unité de détection de sous-système du véhicule (1.3) qui est configurée pour détecter les données de sous-système du véhicule et les mettre à disposition de manière transmissible,
dans lequel l'unité formant base de données (2) est connectée par données à l'unité de détection d'état (1) et présente un module de base de données statique (2.1),
**caractérisé en ce**
**que** l'unité formant base de données (2) présente en outre un module de base de données dynamique (2.2) et un module de gestion de données (2.3),
**que** le module de base de données statique (2.1) présente des données statiques concernant les relations de cause à effet pour des émissions hors chaîne cinématique,
**que** le module de base de données dynamique (2.2) présente des données variables concernant les émissions hors chaîne cinématique,
**que** le module de gestion de données (2.3) est configuré pour inscrire ou effacer les données variables dans le module de base de données dynamique (2.2) et est en outre configuré pour appeler les données statiques à partir du module de base de données statique (2.1) et les données variables à partir du module de base de données dynamique (2.2) et pour les mettre à disposition de manière transmissible en tant que données de base de données,
**que** l'unité de commande et d'évaluation (3) est connectée par données à l'unité de détection d'état (1) et à l'unité formant base de données (2) et est configurée pour obtenir les données d'état en provenance de l'unité de détection d'état (1) et les données de base de données en provenance de l'unité formant base de données (2) et pour mettre à disposition des ordres de réglage provisoires alternatifs à partir des données d'état et des données de base de données, dans lequel des valeurs caractéristiques d'émissions prédictives concernant les émissions hors chaîne cinématique sont associées aux ordres de réglage provisoires alternatifs,
**que** l'unité de commande et d'évaluation présente un module de calcul (3.1) qui est configuré pour calculer, à partir des données d'état et des données de base de données, un budget d'émissions pour les émissions hors chaîne cinématique d'une unité de conduite et pour déterminer, au moyen du budget d'émissions, des valeurs caractéristiques d'émissions de consigne pour les émissions hors chaîne cinématique pour les ordres de réglage alternatifs provisoires,
**que** l'unité de commande et d'évaluation présente un module d'évaluation (3.2) qui est configuré pour sélectionner un ordre de réglage final parmi les ordres de réglage provisoires alternatifs au moyen d'une comparaison des valeurs caractéristiques d'émissions prédictives avec les valeurs caractéristiques d'émissions de consigne
**et que** l'unité de commande et d'évaluation est configurée pour délivrer en sortie l'ordre de réglage final à une unité d'actionneur (4), dans lequel un état du véhicule peut être influencé au moyen de l'unité d'actionneur (4).

2. Système de régulation d'état du véhicule selon la revendication 1,
**caractérisé en ce**
**qu'il** est **conçu** comme un système conforme à la norme de la SAE niveaux 2 **à 5.**

3. **Système de** régulation d'état du véhicule selon les revendications 1 et 2,
**caractérisé en ce**
**que le sous-système** du véhicule est un système de freinage (5) et/ou un système de pneumatiques.

4. Système de régulation d'état du véhicule selon l'une des revendications précédentes,
**caractérisé en ce**
**que** l'état du véhicule peut être influencé par le système de freinage (5) sous la forme d'une décélération.

5. Système de régulation d'état du véhicule selon l'une des revendications précédentes,
**caractérisé en ce**
**que** l'unité de commande et d'évaluation (3) et l'unité formant base de données (2) forment une unité structurelle.

6. Système de régulation d'état du véhicule selon l'une des revendications précédentes,
**caractérisé en ce**
**que** des données relatives à un historique d'état peuvent être inscrites dans la base de données dynamique (2.2).

7. Système de régulation d'état du véhicule selon l'une des revendications précédentes,
**caractérisé en ce**
**que** l'unité de commande et d'évaluation (3) est configurée pour évaluer, au moyen des données d'état, un degré de réalisation relatif aux émissions d'un ordre de réglage final antérieur et pour mettre à jour les données variables au moyen du module de gestion de données (2.3).

8. Véhicule routier,
présentant un système de régulation de véhicule selon l'une des revendications précédentes et présentant un frein à friction.

9. Procédé pour la régulation de l'état du véhicule au moyen d'un système de régulation d'état du véhicule selon l'une des revendications 1 à 7, présentant les étapes de procédé suivantes :
a) inscription de données statiques dans le module de base de données statique (2.1) en tant que paramétrage,
b) détection de données d'état par l'unité de détection d'état (1) et mise à disposition pour la transmission,
c) obtention de données d'état en provenance de l'unité de détection d'état (1) et de données de base de données en provenance de l'unité de base de données (2) par l'unité de commande et d'évaluation (3),
d) mise à disposition d'ordres de réglage provisoires alternatifs et association de valeurs caractéristiques d'émissions prédictives concernant des émissions hors chaîne cinématique aux ordres de réglage provisoires alternatifs par l'unité de commande et d'évaluation (3),
e) calcul d'un budget d'émissions pour les émissions hors chaîne cinématique d'une unité de conduite à partir des données d'état et des données de base de données,
f) calcul, à partir du budget d'émissions, de valeurs caractéristiques d'émissions cibles pour les émissions hors chaîne cinématique,
g) sélection d'un ordre de réglage final parmi les ordres de réglage provisoires alternatifs au moyen d'une comparaison des valeurs caractéristiques d'émissions prédictives et des valeurs caractéristiques d'émissions de consigne,
h) sortie de l'ordre de réglage final à une unité d'actionneur (4) et influence d'un état du véhicule,
i) inscription et/ou suppression de données variables du module de base de données dynamique (2.2) au moyen de l'unité de gestion de données (2.3).

10. Procédé pour la régulation d'état du véhicule selon la revendication 9,
présentant la mise en œuvre répétée des étapes de procédé a) à i) et
présentant les étapes de procédé supplémentaires suivantes :
j) détection de valeurs caractéristiques d'émissions réelles concernant des émissions hors chaîne cinématique d'ordres de réglage finals déjà sortis dans l'unité de conduite,
k) intégration des valeurs caractéristiques d'émissions réelles dans le budget d'émissions et calcul d'un budget d'émissions restant pour les émissions hors chaîne cinématique pour une unité de conduite restante,
l) calcul de paramètres d'émissions cibles mis à jour pour les émissions hors chaîne cinématique à partir du budget d'émissions restant,
m) sélection de l'ordre de réglage final parmi les ordres de réglage provisoires alternatifs au moyen d'une comparaison des valeurs caractéristiques d'émissions prédictives avec les valeurs caractéristiques d'émissions de consigne mises à jour.
